(19) Europäisches Patentamt
European Patent Office
Office européen des brevets

(11) **EP 4 664 970 A1**

(12) **EUROPEAN PATENT APPLICATION**

(43) Date of publication:
**17.12.2025 Bulletin 2025/51**

(21) Application number: **25181577.5**

(22) Date of filing: **09.06.2025**

(51) International Patent Classification (IPC):
*H04W 24/02* (2009.01)

(52) Cooperative Patent Classification (CPC):
**H04W 24/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **13.06.2024 US 202418742752**

(71) Applicant: **Lenovo (Singapore) Pte. Ltd.
New Tech Park 556741 (SG)**

(72) Inventors:
• **SONI, Tapisha
556741 Singapore (SG)**
• **POURAHMADI, Vahid
556741 Singapore (SG)**
• **LÖHR, Joachim
556741 Singapore (SG)**

(74) Representative: **Marks & Clerk LLP
15 Fetter Lane
London EC4A 1BW (GB)**

(54) **ARTIFICIAL INTELLIGENCE IN WIRELESS COMMUNICATIONS**

(57) Various aspects of the present disclosure relate to artificial intelligence in wireless communications. An apparatus, such as a UE, receives an indication of one or more validity criterion for a portion of network context information, and stores the indication of the one or more validity criterion for the portion of the network context information as part of learning model data.

Figure 18

**Description**

TECHNICAL FIELD

The present disclosure relates to wireless communications, and more specifically to data collection (e.g., aggregation, communication, transmittal, retrieval) for artificial intelligence (AI) in wireless communications.

BACKGROUND

A wireless communications system may include one or multiple network communication devices, such as base stations, which may support wireless communications for one or multiple user communication devices, which may be otherwise known as user equipment (UE), or other suitable terminology. The wireless communications system may support wireless communications with one or multiple user communication devices by utilizing resources of the wireless communication system (e.g., time resources (e.g., symbols, slots, subframes, frames, or the like) or frequency resources (e.g., subcarriers, carriers, or the like). Additionally, the wireless communications system may support wireless communications across various radio access technologies including third generation (3G) radio access technology, fourth generation (4G) radio access technology, fifth generation (5G) radio access technology, among other suitable radio access technologies beyond 5G (e.g., sixth generation (6G)).

SUMMARY

An article "a" before an element is unrestricted and understood to refer to "at least one" of those elements or "one or more" of those elements. The terms "a," "at least one," "one or more," and "at least one of one or more" may be interchangeable. As used herein, including in the claims, "or" as used in a list of items (e.g., a list of items prefaced by a phrase such as "at least one of" or "one or more of" or "one or both of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on". Further, as used herein, including in the claims, a "set" may include one or more elements.

As discussed herein, various terminology may be additionally or alternatively be used (e.g., interchangeably) to refer to similar concepts. For instance, the terms "transmit," "send," "communicate," "broadcast" may be used to refer to similar concepts. Further, the terms "receive," "obtain," "acquire" may be used to refer to similar concepts.

Some implementations of the method and apparatuses described herein may further include a UE for wireless communication to receive (e.g., obtain, acquire) an indication of one or more validity criterion for a portion of network context information; and store the indication of the one or more validity criterion for the portion of the network context information as part of learning model data.

In some implementations of the method and apparatuses for a UE described herein, the indication of the one or more validity criterion for the portion of the network context information includes at least one of vendor specific validity information, cell specific validity information, or at least one radio access network (RAN) notification area; the indication of the one or more validity criterion for the portion of the network context information includes one or more nodes for applying a same interpretation of the network context information; the at least one processor is configured cause the UE to receive one or more identifiers of the network context information; the at least one processor is configured cause the UE to one or more of: jointly receive the one or more identifiers of the network context information and the indication of the one or more validity criterion for the portion of the network context information; or jointly receive the one or more identifiers of the network context information and a dataset for learning model life cycle management; the indication of the one or more validity criterion for the portion of the network context information is received aperiodically prior to a received dataset for learning model life cycle management; the at least one processor is configured cause the UE to transmit capability information that indicates whether the UE supports learning model-enabled measurement and reporting.

Some implementations of the method and apparatuses described herein may further include a UE for wireless communication to generate an indication of one or more validity criterion for a portion of UE context information; and transmit (e.g., send, communicate, broadcast) the indication of one or more validity criterion for the portion of UE context information.

In some implementations of the method and apparatuses for a UE described herein, at least one processor is configured to cause the UE to receive configuration information for data collection of a dataset for learning model life cycle management, wherein the configuration information includes timing information for a duration of validity of the configuration information for data collection; the indication of the one or more validity criterion for the portion of UE context information includes one or more of vendor specific validity information or UE specific validity information; the UE context information includes one or more of antenna port layout information for the UE, UE battery information, UE movement data, or one or more UE hardware specifications.

Some implementations of the method and apparatuses described herein may further include a processor for wireless communication to receive an indication of one or more validity criterion for a portion of network context information; and store the indication of the one or more validity criterion for the portion of the network context information as part of learning model data.

In some implementations of the method and apparatuses for a processor described herein, the indication of the one or more validity criterion for the portion of the network context information includes at least one of vendor specific validity information, cell specific validity information, or at least one RAN notification area; the indication of the one or more validity criterion for the portion of the network context information includes one or more nodes for applying a same interpretation of the network context information; the at least one controller is configured cause the processor to receive one or more identifiers of the network context information; the at least one controller is configured cause the processor to one or more of: jointly receive the one or more identifiers of the network context information and the indication of the one or more validity criterion for the portion of the network context information; or jointly receive the one or more identifiers of the network context information and a dataset for learning model life cycle management; the indication of the one or more validity criterion for the portion of the network context information is received aperiodically prior to a received dataset for learning model life cycle management; the at least one controller is configured cause the processor to transmit capability information that indicates whether a UE supports learning model-enabled measurement and reporting.

Some implementations of the method and apparatuses described herein may further include a processor for wireless communication to generate an indication of one or more validity criterion for a portion of UE context information; and transmit the indication of one or more validity criterion for the portion of UE context information.

In some implementations of the method and apparatuses for a processor described herein, the at least one controller is configured to cause the processor to receive configuration information for data collection of a dataset for learning model life cycle management, wherein the configuration information includes timing information for a duration of validity of the configuration information for data collection; the indication of the one or more validity criterion for the portion of UE context information includes one or more of vendor specific validity information or UE specific validity information; the UE context information includes one or more of antenna port layout information for the UE, UE battery information, UE movement data, or one or more UE hardware specifications.

Some implementations of the method and apparatuses described herein may further include a method performed by a UE, the method including receiving an indication of one or more validity criterion for a portion of network context information; and storing the indication of the one or more validity criterion for the portion of the network context information as part of learning model data.

In some implementations of the method and apparatuses for a UE described herein, the indication of the one or more validity criterion for the portion of the network context information includes at least one of vendor specific validity information, cell specific validity information, or at least one RAN notification area; the indication of the one or more validity criterion for the portion of the network context information includes one or more nodes for applying a same interpretation of the network context information; receiving one or more identifiers of the network context information; one or more of: jointly receiving the one or more identifiers of the network context information and the indication of the one or more validity criterion for the portion of the network context information; or jointly receiving the one or more identifiers of the network context information and a dataset for learning model life cycle management; the indication of the one or more validity criterion for the portion of the network context information is received aperiodically prior to a received dataset for learning model life cycle management; transmitting capability information that indicates whether the UE supports learning model-enabled measurement and reporting.

Some implementations of the method and apparatuses described herein may further include a method performed by a UE, the method including generating an indication of one or more validity criterion for a portion of UE context information; and transmitting the indication of one or more validity criterion for the portion of UE context information.

In some implementations of the method and apparatuses described herein, the method further comprising receiving configuration information for data collection of a dataset for learning model life cycle management, wherein the configuration information includes timing information for a duration of validity of the configuration information for data collection; the indication of the one or more validity criterion for the portion of UE context information includes one or more of vendor specific validity information or UE specific validity information; the UE context information includes one or more of antenna port layout information for the UE, UE battery information, UE movement data, or one or more UE hardware specifications.

Some implementations of the method and apparatuses described herein may further include a network equipment (NE) for wireless communication to generate an indication of one or more validity criterion for a portion of network context information; and transmit the indication of one or more validity criterion for the portion of network context information.

In some implementations of the method and apparatuses for a NE described herein, the indication of the one or more validity criterion for the portion of network context information includes at least one of vendor specific validity information, cell specific validity information, or at least one RAN notification area; the at least one processor is configured cause the NE to transmit one or more identifiers of the network context information; the at least one processor is configured cause the NE to one or more of: jointly transmit the one or more identifiers of the network context information and a dataset for learning model life cycle management; or jointly transmit the one or more identifiers of the network context information and the indication of one or more validity criterion for the portion of the network context information; the at least one processor is configured cause the NE to transmit the indication of the one or more validity criterion for the portion of network context information aperiodically prior to a transmitted dataset for learning model life cycle management; the network context information includes one or more of at least one network deployment scenario information, beam shape information, codebook information, antenna array information, transmitter to remote unit mapping, or one or more antenna down tilt angles.

Some implementations of the method and apparatuses described herein may further include a NE for wireless communication to receive an indication of one or more validity criterion for a portion of UE context information; and store the indication of the one or more validity criterion for the portion of UE context information as part of learning model data.

In some implementations of the method and apparatuses described herein, the at least one processor is configured to cause the NE to transmit configuration information for data collection of a dataset for learning model life cycle management, wherein the configuration information includes timing information for a duration of validity of the configuration information for data collection; the at least one processor is configured to cause the NE to receive identifiers for the portion of the UE context information.

Some implementations of the method and apparatuses described herein may further include a method performed by a NE, the method including generating an indication of one or more validity criterion for a portion of network context information; and transmitting the indication of one or more validity criterion for the portion of network context information.

In some implementations of the method and apparatuses for a NE described herein, the indication of the one or more validity criterion for the portion of network context information includes at least one of vendor specific validity information, cell specific validity information, or at least one RAN notification area; transmitting one or more identifiers of the network context information; one or more of: jointly transmitting the one or more identifiers of the network context information and a dataset for learning model life cycle management; or jointly transmitting the one or more identifiers of the network context information and the indication of one or more validity criterion for the portion of the network context information; transmitting the indication of the one or more validity criterion for the portion of network context information aperiodically prior to a transmitted dataset for learning model life cycle management; the network context information includes one or more of at least one network deployment scenario information, beam shape information, codebook information, antenna array information, transmitter to remote unit mapping, or one or more antenna down tilt angles.

Some implementations of the method and apparatuses described herein may further include a method performed by a NE, the method including receiving an indication of one or more validity criterion for a portion of UE context information; and storing the indication of the one or more validity criterion for the portion of UE context information as part of learning model data.

In some implementations of the method and apparatuses described herein, the method further comprising transmitting configuration information for data collection of a dataset for learning model life cycle management, wherein the configuration information includes timing information for a duration of validity of the configuration information for data collection; receiving identifiers for the portion of the UE context information.

BRIEF DESCRIPTION OF THE DRAWINGS

Figure 1 illustrates an example of a wireless communications system in accordance with aspects of the present disclosure.

Figure 2 illustrates an example AI framework 200.

Figure 3 illustrates an example block diagram 300 for a node A one sided model.

Figure 4 illustrates an example block diagram 400 for a node B one sided model.

Figure 5 illustrates an example block diagram 500 for a two sided model.

Figure 6 illustrates a signaling diagram 600 according to aspects of the present disclosure.

Figure 7 illustrates a signaling diagram 700 according to aspects of the present disclosure.

Figure 8 illustrates a signaling diagram 800 according to aspects of the present disclosure.

Figure 9 illustrates a signaling diagram 900 in accordance with aspects of the present disclosure.

Figure 10 illustrates a signaling diagram 1000 in accordance with aspects of the present disclosure.

Figure 11 illustrates a signaling diagram 1100 in accordance with aspects of the present disclosure.

Figure 12 illustrates an example signaling diagram 1200 in accordance with aspects of the present disclosure.

Figure 13 illustrates an example signaling diagram 1300 in accordance with aspects of the present disclosure.

Figure 14 illustrates an example signaling diagram 1400 in accordance with aspects of the present disclosure.

Figure 15 illustrates an example of a UE 1500 in accordance with aspects of the present disclosure.

Figure 16 illustrates an example of a processor 1600 in accordance with aspects of the present disclosure.

Figure 17 illustrates an example of a NE 1700 in accordance with aspects of the present disclosure.

Figure 18 illustrates a flowchart of a method 1800 in accordance with aspects of the present disclosure.

Figure 19 illustrates a flowchart of a method 1900 in accordance with aspects of the present disclosure.

Figure 20 illustrates a flowchart of a method 2000 in accordance with aspects of the present disclosure.

Figure 21 illustrates a flowchart of a method 2100 in accordance with aspects of the present disclosure.

Figure 22 illustrates a flowchart of a method 2200 in accordance with aspects of the present disclosure.

Figure 23 illustrates a flowchart of a method 2300 in accordance with aspects of the present disclosure.

Figure 24 illustrates a flowchart of a method 2400 in accordance with aspects of the present disclosure.

Figure 25 illustrates a flowchart of a method 2500 in accordance with aspects of the present disclosure.

DETAILED DESCRIPTION

Wireless communications systems can utilize artificial intelligence (AI) and machine learning (ML) (AI/ML, hereinafter referred to as "AI") for a variety of different purposes, such as for network operation, network optimization, automated processing (e.g., self-driving cars in vehicle to everything (V2X) scenarios), network planning, security information and event management (SIEM)), etc. AI can leverage AI models (referred to herein as "models") which represent programs and/or algorithms trained on a set of data to provide outputs, such as to recognize patterns, make decisions, generate content, etc. AI models, for instance, can apply different algorithms to data inputs to provide output for performing different tasks.

AI in wireless communications systems can involve processes such as model training, model testing, and model inference to enable AI models to perform different tasks pertaining to wireless communications. Further, multiple nodes (e.g., UEs and NEs) can be involved in AI functionality that can exchange data and can each perform different AI processing to perform AI tasks. AI models can be trained for different datasets, scenarios, and configurations, and multiple models may be implemented for individual AI functionality supported by nodes. For instance, a model for an AI functionality supported by a particular node (e.g., a UE) may be trained with a dataset subject to conditions of a first node (e.g., UE and/or gNB) and conditions of a second node (e.g., a different UE and/or gNB). A preferable AI model can be a model which can be generalized for different datasets subject to different scenarios, configurations, and conditions of different nodes and can be applicable to any node. However, considering the notion of differing datasets, there are significant challenges to creating a model that is generalizable for a functionality. Therefore, a node may contain multiple models for one AI functionality supported by that node.

**In** one proposal, information relevant to maintaining consistency in training and inference can be exchanged between the nodes and/or vendors (e.g., different mobile operators). However, such proposals may compromise the privacy of the information from different nodes and/or vendors. **In** another proposal, different AI models can be trained separately for each node and/or vendor to attempt to protect confidential information. However, such proposals can be complex as the models can be difficult to generalize for different scenarios, configurations, and conditions of different nodes and/or vendors. Thus, such proposals can be resource intensive and cause significant signaling overhead.

Accordingly, implementations described in the present disclosure provide identifiers (IDs) for conditions of nodes (e.g., UE, NE) which enable the exchange of information among different nodes in various phases of AI model life cycle management (LCM), such as in training phases, update phases, inference phases, etc. Described implementations also enable information privacy of nodes involved in training and inference to be maintained. The described implementations are applicable to a variety of different model scenarios, such as one sided UE models, one sided network models, and two sided models. A two sided model, for instance, can extend across multiple nodes, such as by implementing model features at both UE and network nodes.

In the present disclosure the notions of conditions, additional conditions, and context are discussed and are described in more detail below. Further, "conditions" and "additional conditions" may be used interchangeably to refer to various conditions across a wireless communications network, such as UE side conditions, network side conditions, and combinations thereof. Conditions, for instance, can refer to state information such as deployment state, hardware state, logic state (e.g., internal functionality state), vendor state, AI capability state, etc. Further, "context" can refer to conditions (e.g., conditions and/or additional conditions), scenarios, configurations, or combinations thereof. For instance, context information can be utilized to determine support, applicability, and/or operation of different AI models and/or functionality at different nodes, e.g., UEs and/or NEs.

The present disclosure discusses different granularities of visibility and consistency of conditions and options to associate IDs to parameters and/or elements included in conditions. Visibility, for instance, can indicate whether the content of conditions is understood and/or known throughout entities (e.g., nodes) that share a common set of validity criterion, also referred to herein as a validity group and/or validity area. Further, conditions can be considered to be consistent throughout a validity group if an association of IDs to the parameters of conditions is consistent (e.g., the same) within the validity group. Conditions (e.g., additional conditions) may include information which is privacy sensitive and thus a node and/or vendor may specify that such information is not to be exposed to a different node and/or vendor. Therefore, the level of visibility and consistency of the associated IDs can be a concern when exchanged among nodes from different vendors.

Implementations described in the present disclosure can thus provide an association of identifiers to at least a part of context (e.g., conditions and/or additional conditions) that can be applied during model training and inference for an AI functionality. Further, aspects for information exchange for privacy-sensitive content of the context are described, e.g., considering visibility and consistency of context such as conditions and/or additional conditions. Validity criterion are also described that can used to define validity groups (e.g., validity areas) in which context information (e.g., conditions, additional conditions of UEs and/or network) can be consistent.

The present disclosure also describes techniques for managing the visibility and consistency of network side context information across different nodes within a validity group to be vendor specific and/or cell specific, and for UE side additional context with a validity group to be UE specific and/or vendor specific. Further, signaling techniques for context information (e.g., conditions, additional conditions) during data collection are described, e.g., using associated IDs that are linked to a dataset and a validity group for the context information. Indicators of associated IDs for a validity group, for instance, can be sent during data collection.

The present disclosure also describes techniques for enabling communication of context information for AI in UE mobility scenarios, e.g., when a UE moves between different NEs and/or different cells. For instance, for a UE side model during a UE handover process, an indicator of a validity group (e.g., validity indicator) of context information of a target NE (e.g., a NE to which the UE is handed over) can be provided to the UE. In implementations the target NE can send a validity indicator to a source NE which forwards the validity indicator to the UE. In implementations context information (e.g., conditions, additional conditions) of the target NE in the form of associated IDs can be sent proactively during radio resource control (RRC) reconfiguration and/or the context information can be sent directly from the target NE to the UE, e.g., based on receiving a request from the UE.

Implementations also consider network sided models in UE mobility scenarios where UE side context (e.g., conditions, additional conditions) can be provided to a target NE. For instance, UE side context information can be directly sent from the source NE to the target NE after handover acknowledgment from the target NE. Alternatively or additionally, the target NE may request that the UE provide its context information to the target NE. Alternatively or additionally, the UE may report its context information proactively, e.g., during RRC reconfiguration complete.

Thus, the disclosed implementations can align the consistency of context information between different NEs and/or cells, such as by enabling an indicator of a validity group of context information (e.g., conditions, additional conditions) of a target NE to be exchanged for a UE side model and an indicator of a validity group of context information (e.g., conditions, additional conditions) of the UE to be exchanged for a network side model.

By utilizing the described techniques, consistent utilization of AI models and/or functionality across a wireless communication network (e.g., at UEs and/or NEs) can be realized, which can increase signaling accuracy, reduce signaling errors, and reduce signaling overhead, among other benefits.

Aspects of the present disclosure are described in the context of a wireless communications system.

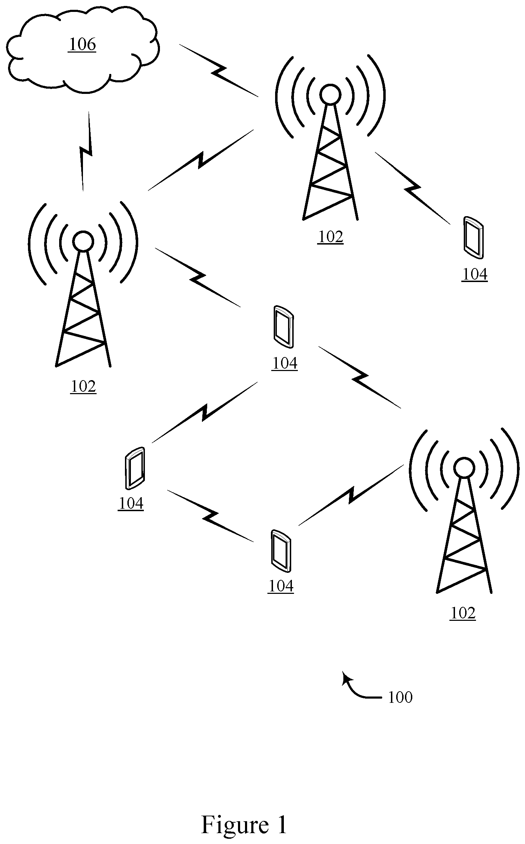

**Figure 1** illustrates an example of a wireless communications system 100 in accordance with aspects of the present disclosure. The wireless communications system 100 may include one or more NE 102, one or more UE 104, and a core network (CN) 106. The wireless communications system 100 may support various radio access technologies. In some implementations, the wireless communications system 100 may be a 4G network, such as an LTE network or an LTE-Advanced (LTE-A) network. In some other implementations, the wireless communications system 100 may be a NR network, such as a 5G network, a 5G-Advanced (5G-A) network, or a 5G ultrawideband (5G-UWB) network. In other implementations, the wireless communications system 100 may be a combination of a 4G network and a 5G network, or other suitable radio access technology including Institute of Electrical and Electronics Engineers (IEEE) 802.11 (Wi-Fi), IEEE 802.16 (WiMAX), IEEE 802.20. The wireless communications system 100 may support radio access technologies beyond 5G, for example, 6G. Additionally, the wireless communications system 100 may support technologies, such as time division multiple access (TDMA), frequency division multiple access (FDMA), or code division multiple access (CDMA), etc.

The one or more NE 102 may be dispersed throughout a geographic region to form the wireless communications system 100. One or more of the NE 102 described herein may be or include or may be referred to as a network node, a base station, a network element, a network function, a network entity, a RAN, a NodeB, an eNodeB (eNB), a next-generation NodeB (gNB), or other suitable terminology. An NE 102 and a UE 104 may communicate via a communication link, which may be a wireless or wired connection. For example, an NE 102 and a UE 104 may perform wireless communication (e.g., receive signaling, transmit signaling) over a Uu interface.

An NE 102 may provide a geographic coverage area for which the NE 102 may support services for one or more UEs 104 within the geographic coverage area. For example, an NE 102 and a UE 104 may support wireless communication of signals related to services (e.g., voice, video, packet data, messaging, broadcast, etc.) according to one or multiple radio access technologies. In some implementations, an NE 102 may be moveable, for example, a satellite associated with a non-terrestrial network (NTN). In some implementations, different geographic coverage areas associated with the same or different radio access technologies may overlap, but the different geographic coverage areas may be associated with different NE 102.

The one or more UEs 104 may be dispersed throughout a geographic region of the wireless communications system 100. A UE 104 may include or may be referred to as a remote unit, a mobile device, a wireless device, a remote device, a subscriber device, a transmitter device, a receiver device, or some other suitable terminology. In some implementations, the UE 104 may be referred to as a unit, a station, a terminal, or a client, among other examples. Additionally, or alternatively, the UE 104 may be referred to as an Internet-of-Things (IoT) device, an Internet-of-Everything (IoE) device, or machine-type communication (MTC) device, among other examples.

A UE 104 may be able to support wireless communication directly with other UEs 104 over a communication link. For example, a UE 104 may support wireless communication directly with another UE 104 over a device-to-device (D2D) communication link. In some implementations, such as vehicle-to-vehicle (V2V) deployments, vehicle-to-everything (V2X) deployments, or cellular-V2X deployments, the communication link may be referred to as a sidelink. For example, a UE 104 may support wireless communication directly with another UE 104 over a PC5 interface.

An NE 102 may support communications with the CN 106, or with another NE 102, or both. For example, an NE 102 may interface with other NE 102 or the CN 106 through one or more backhaul links (e.g., S1, N2, N6, or other network interface). In some implementations, the NE 102 may communicate with each other directly. In some other implementations, the NE 102 may communicate with each other indirectly (e.g., via the CN 106). In some implementations, one or more NE 102 may include subcomponents, such as an access network entity, which may be an example of an access node controller (ANC). An ANC may communicate with the one or more UEs 104 through one or more other access network transmission entities, which may be referred to as a radio heads, smart radio heads, or transmission-reception points (TRPs).

The CN 106 may support user authentication, access authorization, tracking, connectivity, and other access, routing, or mobility functions. The CN 106 may be an evolved packet core (EPC), or a 5G core (5GC), which may include a control plane entity that manages access and mobility (e.g., a mobility management entity (MME), an access and mobility management functions (AMF)) and a user plane entity that routes packets or interconnects to external networks (e.g., a serving gateway (S-GW), a packet data network (PDN) gateway (P-GW), or a user plane function (UPF)). In some implementations, the control plane entity may manage non-access stratum (NAS) functions, such as mobility, authentication, and bearer management (e.g., data bearers, signal bearers, etc.) for the one or more UEs 104 served by the one or more NE 102 associated with the CN 106.

The CN 106 may communicate with a packet data network over one or more backhaul links (e.g., via an S1, N2, N6, or other network interface). The packet data network may include an application server. In some implementations, one or more UEs 104 may communicate with the application server. A UE 104 may establish a session (e.g., a protocol data unit (PDU) session, or the like) with the CN 106 via an NE 102. The CN 106 may route traffic (e.g., control information, data, and the like) between the UE 104 and the application server using the established session (e.g., the established PDU session). The PDU session may be an example of a logical connection between the UE 104 and the CN 106 (e.g., one or more network functions of the CN 106).

In the wireless communications system 100, the NEs 102 and the UEs 104 may use resources of the wireless communications system 100 (e.g., time resources (e.g., symbols, slots, subframes, frames, or the like) or frequency resources (e.g., subcarriers, carriers)) to perform various operations (e.g., wireless communications). In some implementations, the NEs 102 and the UEs 104 may support different resource structures. For example, the NEs 102 and the UEs 104 may support different frame structures. In some implementations, such as in 4G, the NEs 102 and the UEs 104 may support a single frame structure. In some other implementations, such as in 5G and among other suitable radio access technologies, the NEs 102 and the UEs 104 may support various frame structures (i.e., multiple frame structures). The NEs 102 and the UEs 104 may support various frame structures based on one or more numerologies.

One or more numerologies may be supported in the wireless communications system 100, and a numerology may include a subcarrier spacing and a cyclic prefix. A first numerology (e.g., $\mu$=0) may be associated with a first subcarrier spacing (e.g., 15 kHz) and a normal cyclic prefix. In some implementations, the first numerology (e.g., $\mu$=0) associated with the first subcarrier spacing (e.g., 15 kHz) may utilize one slot per subframe. A second numerology (e.g., $\mu$=1) may be associated with a second subcarrier spacing (e.g., 30 kHz) and a normal cyclic prefix. A third numerology (e.g., $\mu$=2) may be associated with a third subcarrier spacing (e.g., 60 kHz) and a normal cyclic prefix or an extended cyclic prefix. A fourth numerology (e.g., $\mu$=3) may be associated with a fourth subcarrier spacing (e.g., 120 kHz) and a normal cyclic prefix. A fifth numerology (e.g., $\mu$=4) may be associated with a fifth subcarrier spacing (e.g., 240 kHz) and a normal cyclic prefix.

A time interval of a resource (e.g., a communication resource) may be organized according to frames (also referred to as radio frames). Each frame may have a duration, for example, a 10 millisecond (ms) duration. In some implementations, each frame may include multiple subframes. For example, each frame may include 10 subframes, and each subframe may have a duration, for example, a 1 ms duration. In some implementations, each frame may have the same duration. In some implementations, each subframe of a frame may have the same duration.

Additionally or alternatively, a time interval of a resource (e.g., a communication resource) may be organized according to slots. For example, a subframe may include a number (e.g., quantity) of slots. The number of slots in each subframe may also depend on the one or more numerologies supported in the wireless communications system 100. For instance, the first, second, third, fourth, and fifth numerologies (i.e., $\mu$=0, $\mu$=1, $\mu$=2, $\mu$=3, $\mu$=4) associated with respective subcarrier spacings of 15 kHz, 30 kHz, 60 kHz, 120 kHz, and 240 kHz may utilize a single slot per subframe, two slots per subframe, four slots per subframe, eight slots per subframe, and 16 slots per subframe, respectively. Each slot may include a number (e.g., quantity) of symbols (e.g., OFDM symbols). In some implementations, the number (e.g., quantity) of slots for a subframe may depend on a numerology. For a normal cyclic prefix, a slot may include 14 symbols. For an extended cyclic prefix (e.g., applicable for 60 kHz subcarrier spacing), a slot may include 12 symbols. The relationship between the number of symbols per slot, the number of slots per subframe, and the number of slots per frame for a normal cyclic prefix and an extended cyclic prefix may depend on a numerology. It should be understood that reference to a first numerology (e.g., $\mu$=0) associated with a first subcarrier spacing (e.g., 15 kHz) may be used interchangeably between subframes and slots.

In the wireless communications system 100, an electromagnetic (EM) spectrum may be split, based on frequency or wavelength, into various classes, frequency bands, frequency channels, etc. By way of example, the wireless communications system 100 may support one or multiple operating frequency bands, such as frequency range designations FR1 (410 MHz - 7.125 GHz), FR2 (24.25 GHz - 52.6 GHz), FR3 (7.125 GHz - 24.25 GHz), FR4 (52.6 GHz - 114.25 GHz), FR4a or FR4-1 (52.6 GHz - 71 GHz), and FR5 (114.25 GHz - 300 GHz). In some implementations, the NEs 102 and the UEs 104 may perform wireless communications over one or more of the operating frequency bands. In some implementations, FR1 may be used by the NEs 102 and the UEs 104, among other equipment or devices for cellular communications traffic (e.g., control information, data). In some implementations, FR2 may be used by the NEs 102 and the UEs 104, among other equipment or devices for short-range, high data rate capabilities.

FR1 may be associated with one or multiple numerologies (e.g., at least three numerologies). For example, FR1 may be associated with a first numerology (e.g., $\mu$=0), which includes 15 kHz subcarrier spacing; a second numerology (e.g., $\mu$=1), which includes 30 kHz subcarrier spacing; and a third numerology (e.g., $\mu$=2), which includes 60 kHz subcarrier spacing. FR2 may be associated with one or multiple numerologies (e.g., at least 2 numerologies). For example, FR2 may be associated with a third numerology (e.g., $\mu$=2), which includes 60 kHz subcarrier spacing; and a fourth numerology (e.g., $\mu$=3), which includes 120 kHz subcarrier spacing.

According to implementations, one or more of the NEs 102 and the UEs 104 are operable to implement various aspects of the techniques described with reference to the present disclosure. For example, a UE 104 can receive, from a NE 102, an indication of one or more validity criterion for a portion of network context information; and store the indication of the one or more validity criterion for the portion of the network context information as part of learning model data. Further, a UE 104 can generate an indication of one or more validity criterion for a portion of UE context information, and transmit, to a NE 102, the indication of one or more validity criterion for the portion of UE context information.

With reference to the utilization of AI in wireless communications systems, the following represent some examples of features and/or terminology that are relevant.

AI-enabled Feature: refers to a feature where AI may be used.

AI Functionality: Functionality refers to an AI-enabled feature/feature group enabled by configurations, where configurations can be supported based on conditions indicated by a UE.

AI Model: A data driven algorithm that applies AI techniques to generate a set of outputs based on a set of inputs.

AI model delivery: Refers to delivery of a model from one entity to another entity in any manner. Examples of an entity include a network node and/or network function (e.g., NE, gNB, LMF, etc.), UE, proprietary server, etc.

AI model Inference: A process of using a trained model to produce a set of outputs based on a set of inputs.

AI model testing: A subprocess of training to evaluate the performance of a final model using a dataset different from one used for model training and validation. Differently from model validation, testing may not assume subsequent tuning of the model.

AI model training: A process to train a model (e.g., by learning an input/output relationship) in a data driven manner and obtain a trained model for inference.

AI model transfer: Delivery of a model over the air interface in a manner that is not transparent to 3GPP signaling. Parameters of a model structure may be known at the receiving end and/or a new model with parameters. Delivery may contain a full model or a partial model.

AI model validation: A subprocess of training to evaluate the quality of a model using a dataset different from one used for model training, which can assist in selecting model parameters that generalize beyond the dataset used for model training.

Applicable functionalities: Applicable functionalities can be a subset of supported functionalities.

Additional conditions: Conditions that may vary for different scenarios, sites, or datasets are defined as additional conditions. Examples of additional conditions include UE internal conditions such as battery, memory, hardware attributes, etc. There may be UE side conditions and network side conditions.

Associated IDs: Identifiers referring to additional conditions, e.g., UE side additional conditions and/or network side additional conditions may be represented by associated IDs.

Data collection: A process of collecting data by network nodes, management entities, and/or UE for the purpose of model training, data analytics, and inference.

Dataset: A related set of information can be collectively called a dataset, which can be used for the purpose of training and is thus referred to as a training dataset.

Functionality identification: A process and/or method of identifying an AI functionality for a common understanding between the network and the UE. Where AI functionality resides can depend on specific use cases and sub-use cases.

Management instruction: Information that can be used to ensure proper inference operation. This information may include selection, activation, deactivation, and/or switching of models and/or AI functionalities, fallback to non-AI operation, etc.

Model activation: Enabling a model for a specific AI-enabled feature.

Model deactivation: Disabling a model for a specific AI-enabled feature.

Model download: Model transfer from the network to UE.

Model identification: A process and/or method of identifying a model for a common understanding between the network and the UE. A process and/or method of model identification may or may not be applicable, and information regarding a model may be shared during model identification.

Model monitoring: A procedure that monitors the inference performance of a model.

Model parameter update: Process of updating the model parameters of a model.

Model selection: The process of selecting a model for activation among multiple models for the same AI enabled feature. Model selection may or may not be carried out simultaneously with model activation.

Model switching: Deactivating a currently active model and activating a different model for a specific AI/ML-enabled feature.

Model update: Process of updating the model parameters and/or model structure of a model.

Model upload: Model transfer from UE to the network.

Offline field data: The data collected from field and used for offline training of a model.

Offline training: An AI training process where a model is trained based on collected dataset, and where the trained model is later used or delivered for inference. There may be cases that may not exactly conform to this definition but could still be categorized as offline training by commonly accepted conventions.

Online field data: The data collected from field and used for online training of a model.

Online training: An AI training process (e.g., which can be continuous) where a model being used for inference is trained in real-time (or near real time) with the arrival of new training samples. The notion of real-time vs. non real-time can be context-dependent and can be relative to an inference timescale. There may be cases that may not exactly conform to this definition but can still be categorized as online training by commonly accepted conventions. Further, model fine tuning and/or retraining may be done via online and/or offline training.

Network-side model: A model whose inference is performed at the network.

Supported functionalities: As a result of functionality identification, the common understanding of functionalities supported can be developed between the network and the UE. The functionalities can be said to be identified and/or supported.

Two-sided model: A paired model over which joint inference is performed, where joint inference includes AI inference performed jointly across the UE and the network. For instance, a first part of inference is firstly performed by UE and then the remaining part is performed by NE, or vice versa.

UE side model: A model whose inference is performed at the UE.

UE state: A state of the UE can be defined as the UE state based on specific UE side conditions such as settings of a UE including internal conditions, additional conditions, a scenario, etc.

NE state: A state of a NE (e.g., gNB) can be defined as a network state based on specific network side conditions such as settings of a NE including additional conditions, a scenario, a configuration, etc.

Scenario: A scenario can be defined as a deployment scenario categorized based on different factors such as channel models (e.g., heavy line of sight/non-line of sight (LOS/NLOS) conditions, urban microcellular (UMi), urban macrocellular (UMa), indoor hotspot (InH)), outdoor/indoor UE distributions, carrier frequencies, UE speeds, antenna spacings, etc. For example, network defined scenarios can be scenarios with network defined dataset categorization. UE defined scenarios can be scenarios with UE defined dataset categorization.

Examples of scenarios include: (a) Various deployment scenarios, e.g.: UMa, UMi and others; 200m inter-site distance (ISD) or 500m ISD and others; same deployment, different cells with different configuration/assumption; gNB height and UE height; (b) Various outdoor/indoor UE distributions, e.g., 100%/0%, 20%/80%, and others; (c) Various UE mobility, e.g., 3km/h, 30km/h, 60km/h, and others.

Configuration: The set of configurations can include one or more of the following aspects: bandwidth, UE speed, antenna port layouts, numerology etc. Examples of configurations (e.g., parameters and settings) include: (a) Various UE parameters, e.g., number of UE Rx beams (including number of panels and UE antenna array dimensions), UE codebook; (b) Various NE settings, e.g., downlink Tx beam codebook (including various Set A of beam(pairs) and NE antenna array dimensions); (c) Various Set A of beam and various Set B of beam.

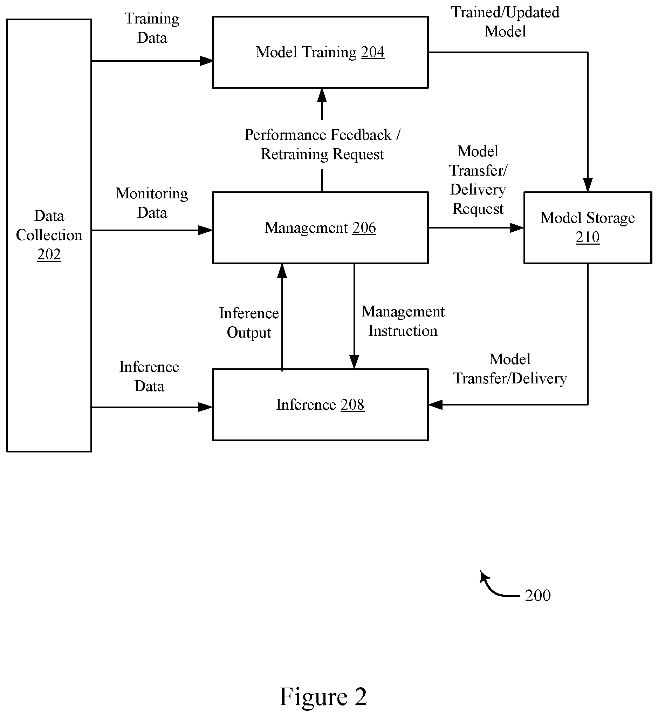

**Figure** 2 illustrates an example AI framework 200. The AI framework 200 includes data collection functions 202, model training functions 204, management functions 206, inference functions 208, and model storage functions 210. The data collection function 202 can provide input data to the model training functions 204, management functions 206, and inference functions 208. The training data can represent data used as input for the model training function 204. The monitoring data can represent data used as input for the management functions 206, e.g., for AI models and/or AI functionalities.

In the AI framework 200 inference data can be used as input for the inference functions 208. Further, the model training functions 204 can perform model training, validation, and testing which may generate model performance metrics that can be used as part of the model testing procedure. The model training functions 204 can also perform data preparation (e.g., data pre-processing and cleaning, formatting, and transformation) based on training data delivered by the data collection function 202. The management function 206 can oversee the operation (e.g., selection, (de)activation, switching, fallback, etc.) and monitoring (e.g., performance) of models and/or AI functionalities. The management function 206 can also make decisions to ensure the proper inference operation based on data received from the data collection function 202 and the inference function 208. Management instruction can represent information for input to manage the inference function 208, such as information for selection, (de)activation, switching of models and/or AI-based functionalities, fallback to non-AI/ML operation (e.g., not relying on inference processes), etc. A model transfer/delivery request can be used to request model(s) to the model storage function 210.

Further to the AI framework 200 performance feedback/retraining request can represent information for input for the model training function 204, e.g., for model (re)training and/or model updating purposes. The inference function 208 can provide outputs from processes of applying AI/ML models and/or AI/ML functionalities using the data that is provided by the data collection function 202 (e.g., inference data) as input. The inference function 208 can also perform data preparation (e.g., data pre-processing and cleaning, data formatting, data transformation, etc.) based on inference data delivered by the data collection function 202. Inference output can represent data used by the management function 206 to monitor the performance of models and/or AI/ML functionalities. The model storage functions 210 can store trained models and/or updated models that can be used to perform the inference functions 208.

LCM of models and/or AI functionality can include functionality-based LCM and model-ID-based LCM. In functionality-based LCM, the network can indicate activation, deactivation, fallback, and/or switching of AI/ML functionality via 3GPP signaling (e.g., RRC, medium access control (MAC) control element (CE), downlink control information (DCI)). Models may not be identified at the network, and the UE may perform model-level LCM. For functionality identification, there may be one or more functionalities defined within an AI/ML-enabled feature, whereby an AI/ML-enabled feature can refer to a feature where AI/ML may be used. The UE may have one model for the functionality, or the UE may have multiple models for the functionality.

For AI/ML functionality identification and functionality-based LCM of UE-side models and/or UE-part of two sided models, functionality can refer to an AI/ML-enabled feature/feature group enabled by configuration(s), where configuration(s) can be supported based on conditions indicated by UE capability. Correspondingly, functionality-based LCM can operate based on, at least, one configuration of AI/ML-enabled feature/feature group or specific configurations of an AI/ML-enabled feature/feature group. After functionality identification, necessity information, and/or mechanisms for the UE to report updates on applicable functionality can be considered, where the applicable functionalities may be a subset of all functionalities. Applicable functionalities can be reported by the UE.

In model-ID-based LCM, models can be identified at the network, and the network and/or UE may activate, deactivate, select, and/or switch individual models via model ID. For model identification and model-ID-based LCM of UE side models and/or UE part of two sided models, model-ID-based LCM can operate based on identified models, where a model may be associated with specific configurations and/or conditions associated with UE capability of an AI/ML-enabled feature/feature group. Further, additional conditions can apply (e.g., scenarios, sites, datasets, etc.) as determined and/or identified between the UE side and network side.

After model identification, necessity information and/or mechanisms for the UE to report updates on applicable UE part and/or UE side model(s) can be considered, where the applicable models may be a subset of all identified models. Applicable models can be reported by the UE. How to handle the impact of UE's internal conditions such as memory, battery, and other hardware attributes on functionality and/or model operations and AI/ML-enabled feature can be considered, and may not preclude existing solutions. For functionality-based and/or model-ID based LCM, once functionalities/models are identified, the same or similar procedures may be used for feature activation, deactivation, switching, fallback, and/or monitoring. Model ID can be used in a functionality (e.g., defined in functionality-based LCM) for LCM operations. Different use cases can be supported, such as channel state information (CSI) feedback enhancement, beam management, positioning accuracy, etc.

Data collection may be performed for different purposes in LCM (e.g., for model training, model inference, model monitoring, model selection, model update, etc.) where each may be done with different requirements and potential specification impact. For different types of offline model training (e.g., UE model, network model, two sided model training) there may not be a latency requirement for data collection. For model inference when required data comes from other entities, there may be a latency requirement for data collection. For performance monitoring (e.g., in real time), when required monitoring data (e.g., performance metrics) comes from other entities, there may be a latency requirement for data collection.

In some use cases it can be assumed that the analysis and/or selection of the data collection frameworks can be based on the RRC_CONNECTED state, e.g., for both data generation and reporting. Analysis and potential enhancement of the non-connected state can be revisited when needed.

At least the following aspects, if applicable, can be considered along with the corresponding specification impact: Measurement configuration and reporting; contents, type, and format of data including data related to model input, data related to ground-truth, quality of the data, and/or other information; signaling of assistance information for categorizing the data (e.g., considering the feasibility of disclosure of proprietary information; and/or signaling for data collection procedures.

In LCM, data collection can be a function that provides input data to the model training, management, and inference functions. Training data represents data for input for the model training function, monitoring data represents data for input for the management of models and/or AI/ML functionalities, and inference data represents data for input for the AI/ML inference function.

For AI/ML-enabled features/feature group, additional conditions can refer to aspects that are assumed for the training of a model but are not a part of UE capability for the AI/ML-enabled feature/feature group and may not imply that additional conditions are necessarily specified. Additional conditions can be divided into two categories: network side additional conditions and UE side additional conditions. For inference for UE side models, to ensure consistency between training and inference regarding network side additional conditions, the following options can apply: Model identification to achieve alignment on the network side additional condition between network side and UE side; model training at network and transfer to UE, where the model has been trained under the additional condition; information and/or indication on network side additional conditions can be provided to UE; consistency assisted by monitoring by UE and/or network, the performance of UE side candidate models and/or AI/ML functionalities to select a model and/or functionality; other approaches are not precluded.

The present disclosure pertains to models including one sided models and two sided models. In one sided models, the model is located either at a node A (e.g., UE) or a node B (e.g., NE) referred to here as $M_A$ (model located at node A) and $M_B$ (model located at node B), respectively. This is for purpose of illustration only, and node A and/or node B can be either a NE or a UE.

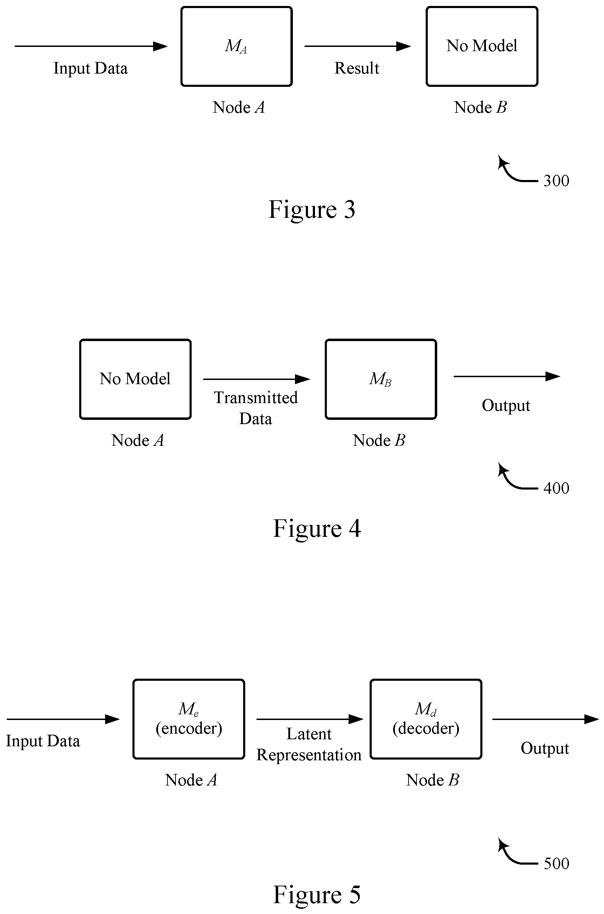

Figure 3 illustrates an example block diagram 300 for a node A one sided model, and Figure 4 illustrates an example block diagram 400 for a node B one sided model. The one sided models in the block diagrams 300, 400, for instance, can be implemented for use cases such as beam management, CSI prediction, radio resource management (RRM) measurement prediction, radio link failure prediction, handover failure prediction, positioning, etc. In the block diagram 300 node A can implement a model $M_A$ and the node B may not implement a model, e.g., may not include AI/ML capability. In the block diagram 400 node A may not implement a model (e.g., may not include AI/ML capability) and node B can implement a model $M_B$. Regarding inference, a model can be a UE side model when the UE performs the inference (e.g., the block diagram 300) and in a network side model inference can be performed by the network, e.g., the block diagram 400.

**Figure** 5 illustrates an example block diagram 500 for a two sided model. In two sided models, one part of the model can be located at a first node and another part of the model can be located at a second node. In the block diagram 500 node A (e.g., UE) can include $M_e$ (encoding model) and node B (e.g., NE) can include $M_d$ (decoding model). Note that this is one example, the location of the encoder and decoder can be alternated. A two sided model can represent a scheme to reduce the required feedback information where an encoding part (e.g., at the UE) can compute a quantized latent representation of the input data, and the decoding part (e.g., at the NE) can receive the latent representation and use the latent representation to reconstruct an output. The input data, for instance, can be a dataset which is based on the channel measurements. For example, the input data be the raw channel inputs of $H^k$ or $H_l^k$ $H^k$ and/or the precoders that are computed from the channel matrix, e.g., the eigenvector associated with the largest eigen-vector of $H^k$ for each subband.

Models may be tailored toward and applicable to specific scenarios, configurations, locations, and deployments, among other factors. In this regard, models may undergo updates (e.g., model changes) as part of their development. After training the models, there may be multiple models (at node A side) associated with different node Bs, and multiple models (at node B side) associated with different node As. Given multiple models for a single functionality, some of which may be scenario or cell-specific, there can be a mechanism for node A and/or node B to select the appropriate model during the inference phase. For models at the UE (e.g., UE side models and/or UE side of a model), the network may have a certain level of control to ensure efficient management (e.g., selection, activation, deactivation, switching, etc.) of models and/or AI/ML functionality.

According to scenarios relevant information (e.g., parameters related to a scenario, conditions and/or additional conditions of node A and node B, configuration, etc.), which may cause a dataset and thus the inference outcome to differ from other models for the same functionality, can be collected and associated with each model in the training phase. The relevant information, for instance, can be important to select a suitable model for the current node A and node B state(s), which can be defined by the conditions and/or additional conditions of node A and node B. Thus, coordination between node A and node B can be performed to ensure that a suitable model for AI/ML functionality can be selected while ensuring consistency in model training and inference for an AI/ML functionality. The present disclosure describes signaling procedures and mechanisms introducing identifiers for conditions of node A and node B which provide support for the exchange of information among different involved nodes (e.g., UE and gNB) in the training phase, and can be used in the inference phase. This can also ensure that the information privacy of nodes involved in training and inference is maintained. These mechanisms are not limited to one sided UE models, and they can be extended further for one sided network models and for two sided models.

According to implementations described in the present disclosure, a node can be a UE (e.g., node A) or a NE (e.g., gNB, node B). A model can be trained for at least one or more specific datasets, scenarios, and configurations. More than one model can be implemented for a single AI/ML functionality supported by a node. A model for an AI/ML functionality supported by a node (e.g., UE) may be trained with a dataset subject to some specific conditions of a node (e.g., UE and/or NE) and specific conditions of the other node (e.g., NE). A model can be generalized for different datasets according to different scenarios, configurations, and conditions of node A and node B, and which can be applicable to any other node. In implementations a node may contain multiple models for one AI/ML functionality supported by that node.

For AI/ML functionality, a model may have a higher likelihood of providing a high precision inference outcome if the model is trained with the same conditions, additional conditions, scenarios, and/or configuration that are observed at the time of inference. Thus model training can be associated with identifiers that represent the conditions, additional conditions, scenarios, and/or configuration under which the model is trained. This can allow categorization of the training dataset based on the conditions, additional conditions, scenarios, and/or configuration when the dataset is generated. As discussed in the present disclosure, conditions, scenarios, configuration, additional conditions, or combinations thereof can be referred to as a "context".

In scenarios a node A may develop different models (e.g., for a same task) for different node Bs. For example, for inference under a NE from Vendor A and a NE from Vendor B, node A may train different models for data from Vendor A NE and Vendor B NE. Alternatively or additionally, certain identifiers referring to the vendor information can be associated during the data collection phase, which can help to differentiate one vendor from another for inference. Identifiers of vendor information may or may not be part of the context.

In at least some implementations an association of identifiers to context information or at least a part of the context information, for example conditions and/or additional conditions applied during model training and inference for a functionality, is introduced. Additional conditions, for instance, represent conditions that may vary for different scenarios, sites, and/or datasets. For example, additional conditions may represent conditions that are not included in a capability. Some examples of additional conditions (e.g., on UE side) include UE internal conditions such as battery, memory, hardware specifications, etc. Additional conditions can include parameters for determining the applicability of a functionality and thus selection of an applicable model. A functionality can be declared as an "applicable functionality" if there exists a model suitable and/or applicable for a specific context (e.g., site, scenario, configuration, additional conditions, etc.) which can be activated for inference.

Additional conditions (e.g., UE side additional conditions and/or network side additional conditions) can be represented by associated IDs and/or other similar identifiers. The implementations described herein are not limited to additional conditions (e.g., part of the context) but can also apply to a complete context and/or parts of the context, e.g., scenario, configuration, conditions, etc. What constitutes a context and/or additional conditions may be subject to implementation. The discussion herein refers to additional conditions which can be a part of a context and identifier(s) of additional conditions can be referred to as associated IDs. Additional conditions may include information which is privacy sensitive and thus a node and/or vendor may specify to not to reveal this information to another node and/or vendor. Therefore, the level of visibility of the associated IDs can become of concern when exchanged among nodes from different vendors.

Additional conditions can be described as a set of parameters and/or conditions such as illustrated in the following. In the following, a total of N number of parameters and/or conditions can constitute the additional conditions.

A set of parameters and/or conditions belonging to additional conditions can be given by,

$$\text{Additional conditions} = [\text{P}_1, \text{P}_2, \text{P}_3, \dots \text{P}_\text{N}]$$

Associated IDs for N number of parameters constituting the additional conditions can be given by,

$$\text{Associated IDs} = [\rho_{P_1}, \rho_{P_2}, \rho_{P_3}, \dots \rho_{PN}]$$

where, $\rho_x$ represents an identifier for a condition and/or parameter X, e.g., $\rho_{P1}$ represents an identifier for a condition/parameter P1. There may exist more than one option for each parameter. $\rho_{P1}^{x}$ represents an identifier for a parameter P1 for option x.

There can be different granularities of visibility and consistency of the additional conditions and options to associate the IDs to parameters and/or elements contained in additional conditions. Visibility can indicate if the content of additional conditions is understood and/or known throughout a validity group. For example, if the parameters constituting additional conditions are known throughout a validity group then the additional conditions can be considered to have full visibility in that validity group. The visibility of additional conditions can indicate the privacy of additional conditions. For instance, if the additional conditions are fully visible among different vendors, this can indicate that the content of additional conditions may not remain confidential. To maintain a level of privacy among different vendors and/or cells, the additional conditions can be either partially visible or completely invisible.

For example, considering a beam management use case, additional conditions can include [P1, P2] where P1 refers to the beam codebook and P2 refers to the antenna array dimensions. Additional conditions can have full visibility across different sites and/or vendors if it is known across different sites and/or vendors that P1 indicates beam codebook and P2 indicates antenna array dimensions.

Additional conditions can be considered to be consistent throughout a validity group if the association of IDs to the parameters of additional conditions is the same in that validity group. Where the consistency of the additional conditions can be valid for a specific validity group, the validity group can be considered as a validity group (e.g., validity area) of additional conditions and/or context.

Considering an example of beam management use cases, consider additional conditions constitute [P1, P2] where

P1 refers to the beam codebook,
assuming two options codebook A and codebook B

P2 refers to the antenna array dimensions,
assuming three options 2*2, 4*4, 8*8

The association of IDs to different options of P1 and P2 can be as follows:

$$\text{P1: codebook A} = 1 \ (\rho\_P1^\wedge 1), \text{codebook B} = 2 \ (\rho\_P1^\wedge 2)$$

$$\text{P2: } 2*2 = 0 \ (\rho\_P2^\wedge 1), 4*4 = 1 \ [\![(\rho)]\!] \ \_P2^\wedge 2), 8*8 = 2 \ [\![(\rho)]\!] \ \_P2^\wedge 3)$$

If the association of IDs as (e.g., as illustrated above) is the same across different cells, vendors, and/or areas, the additional conditions can be considered to be consistent, otherwise, inconsistent across those cells, vendors, and/or validity groups. An area across which the IDs are consistent can be called a validity group (e.g., validity area) for additional conditions. A validity group and/or validity area, for instance, can also be referred to as a set of validity criterion that apply for a particular set of context information, e.g., network context information, UE context information, etc.

In implementations involving a UE sided model, a network can provide the network side additional conditions, e.g., to maintain consistency in training and inference. Thus techniques are discussed to handle the visibility and consistency of the additional conditions across different nodes.

In at least one implementation, the content of additional conditions can be inconsistent among different cells, which can imply that a node vendor can use some random identifier(s) to indicate the associated IDs for the respective additional conditions. In such scenarios, the consistency of the additional conditions can be cell-specific, e.g., a validity area is a cell. An indicator for the validity area (e.g., a cell ID in this case such as physical cell identity (PCI)) can be linked to the additional conditions. An advantage of such an approach is to maintain data privacy as the association of the IDs to the parameters may not be revealed to other sites, nodes, and/or vendors.

In at least one implementation, the content of additional conditions can be consistent at the vendor level such that the association of the IDs to the parameters of additional conditions can be the same within all the cells belonging to one vendor. An indicator of vendor information (e.g., proxy ID) can be linked to the additional conditions. In such cases, the validity area can be cells from the same vendor.

In at least one implementation, the content of additional conditions can be consistent within a particular area. The association of the IDs to the parameters of additional conditions can be the same within that area, e.g., the same to cells located in an area such as RAN notification area (RNA). The validity area, for instance, can be the RNA area. An indicator such as RNA ID can be linked to the additional conditions.

In at least one implementation, the content of additional conditions can be visible and consistent through different vendors and/or cells. In such scenarios, parameters constituting additional conditions can be specified. Alternatively or additionally, the content of additional conditions may be partially visible, e.g., at least some privacy sensitive information and/or parameters may remain confidential while other content can be specified. For example, when additional conditions = $[P_1, P_2, P_3, P_4, P_5]$; $P_1$ and $P_2$ can be confidential parameters which are not consistent among different cells and/or vendors. The validity area for such a case may not be limited to certain cells. It can be up to implementation whether a restriction on the validity area is imposed. In at least one implementation, a cluster of cells may be used to define the validity area for additional conditions.

Alternatively or additionally, associated IDs can be mapped to a single identifier that can represent the additional conditions. The mapping of the IDs to an identifier can be consistent across different sites and/or vendors, which can allow a common understanding of additional conditions across the sites and/or vendors. Although in some examples the additional conditions may not have full visibility across different sites and/or vendors, the additional conditions may maintain consistency in the IDs of additional conditions. For example, different settings of $[\rho_{P1}, \rho_{P2}, \rho_{P3}]$ as given below can be mapped to an integer value, which can be stored in the form of a lookup table.

$$[\rho_{P1}, \rho_{P2}, \rho_{P3}] = [1\ 1\ 1] \Rightarrow 1$$

$$[\rho_{P1}, \rho_{P2}, \rho_{P3}] = [1\ 2\ 1] \Rightarrow 2$$

$$[\rho_{P1}, \rho_{P2}, \rho_{P3}] = [1\ 2\ 4] \Rightarrow 3$$

In at least one implementation, such as to preserve the privacy of condition information (e.g., context), the mapping to a single identifier can be inconsistent and generated vendor and/or cell specific, the mapping of which is not exchanged with other nodes. For example, $[\rho_{P1,}\ \rho_{P2},\ \rho_{P3}] = [111]$ can be mapped to an identifier $x_1$; $[\rho_{P1}.\ \rho_{P2},\ \rho_{P3}] = [1\ 2\ 2]$

can be mapped to an identifier say, $x_2$, and so on, such that $x_1$, $x_2$ may be binary or integer values.

In implementations involving a network side model, the UE may provide the UE side context to be able to generalize a model for scenarios and conditions and to maintain consistency in training and inference. Thus implementations to handle the visibility and consistency of the UE side context information across different nodes are discussed.

In at least one implementation, the content of context information can be inconsistent among different UEs such that a node vendor can use random identifier(s) to indicate associated IDs for respective context information. In such scenarios, the consistency of context information can be UE specific, e.g., the validity area can be per UE. An indicator for the validity area (e.g., UE ID) can be linked to the UE side context information. In such an approach data privacy can be maintained as the association of the IDs to the parameters may not be revealed to other sites, nodes, and/or vendors.

In at least one implementation, the content of context information can be consistent at the vendor level such that the association of the IDs to the parameters of context information is the same for UEs belonging to the same vendor. An indicator of vendor information (e.g., proxy ID) can be linked to context information. As the UE distribution can be random across the cell(s), the scope of consistency by the validity indicator of context information can be defined such as a masked vendor ID.

In at least one implementation, the content of context information can be visible and consistent through different vendors and/or UEs. In this case, parameters constituting context information can be specified. Alternatively, the content of context information may be partially visible, e.g., some privacy sensitive information and/or parameters may remain confidential while other aspects of the context information is specified. For example, when context information = [$P_1$, $P_2$, $P_3$, $P_4$, $P_5$]; $P_1$ and $P_2$ can be confidential parameters which are not consistent among different UEs and/or vendors. The validity area for this case may not be limited to certain UEs. It can be up to implementation if a restriction on the validity area is imposed. In one possible implementation, a cluster of UEs distinguished based on the type of UE (e.g., IoT device, mobile device) may be used to define the validity area of context information.

In least one implementation, associated IDs can be mapped to a single identifier that can represent the context information. The mapping of the IDs to an identifier can be consistent across different UEs or vendors, which can enable a common interpretation of context information across the UEs and/or vendors. Although the context information may not have visibility across different UEs and/or vendors, the context information may maintain consistency in the IDs of additional conditions. For example, different settings of [$\rho_{P1}$, $\rho_{P2}$, $\rho_{P3}$] as given below can be mapped to an integer value, which can be stored in the form of a lookup table.

$$[\rho_{P1}, \rho_{P2}, \rho_{P3}] = [1\ 1\ 1] \Rightarrow 1$$

$$[\rho_{P1}, \rho_{P2}, \rho_{P3}] = [1\ 2\ 1] \Rightarrow 2$$

$$[\rho_{P1}, \rho_{P2}, \rho_{P3}] = [1\ 2\ 4] \Rightarrow 3$$

In least one implementation, such as to preserve the privacy of context information, the mapping to a single identifier can be inconsistent and generated as vendor specific and/or UE specific, such that the mapping information may not be exchanged with other nodes. For example, [$\rho_{P1}$, $\rho_{P2}$, $\rho_{P3}$] = [111] can be mapped to an identifier $x_1$; [$\rho_{P1}$, $\rho_{P2}$, $\rho_{P3}$] = [1 2 2] can be mapped to an identifier $x_2$, and so on, such that $x_1$, $x_2$ may be binary or integer values.

In implementations for a two sided model, a combination of the implementations described herein for UE side model and network side model can be applied. The UE side of a two side model may involve network side context information and the network side of the two sided model may involve information of UE side context information. Thus, a validity area of network side context information and UE side context information can be utilized to maintain privacy of sensitive data such as vendor information or internal conditions of a node, while enabling consistency in training and inference.

According to implementations such as in a UE side model, signaling mechanisms for exchanging information can be used for selection of a model and/or for determining the applicability of AI/ML functionality during the inference phase of a UE side model. Information referring to context information (e.g., conditions and/or additional conditions), for example, in the form of identifiers (associated IDs), can be exchanged between nodes (e.g., UE and network nodes) during a data collection phase for training.

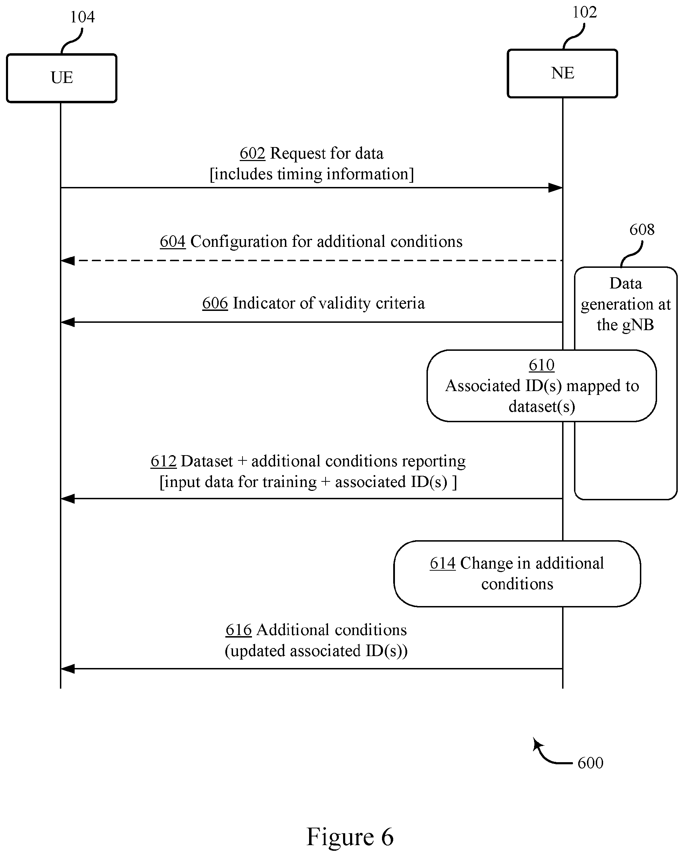

**Figure 6** illustrates a signaling diagram 600 according to aspects of the present disclosure. The signaling diagram 600 may include a UE 104 and a NE 102. In the signaling diagram 600, for UE side model, at 602 the UE 104 can send a request for data from the NE 102 for model training. At 604 the NE 102 can configure the UE 104 for network side additional conditions to be received from the NE 102. The configuration may include information about parameters that constitute network side additional conditions. At 606 the NE 102 can communicate an indicator of validity criterion (e.g., validity group, validity area) for network context information, e.g., conditions and/or additional conditions. At 608 the NE 102 can perform data generation (e.g., dataset(s) for AI/ML LCM) and at 610 mapping of the dataset(s) to associated IDs can be performed by the NE 102. At 612 the dataset along with its associated IDs can be communicated (e.g., transmitted, forwarded) to the UE 104. In implementations at 614 a change in additional conditions can occur at the NE 102 and at 616 the NE 102 can communicate an indication of the change in additional conditions (e.g. updated IDs) to the UE 104.

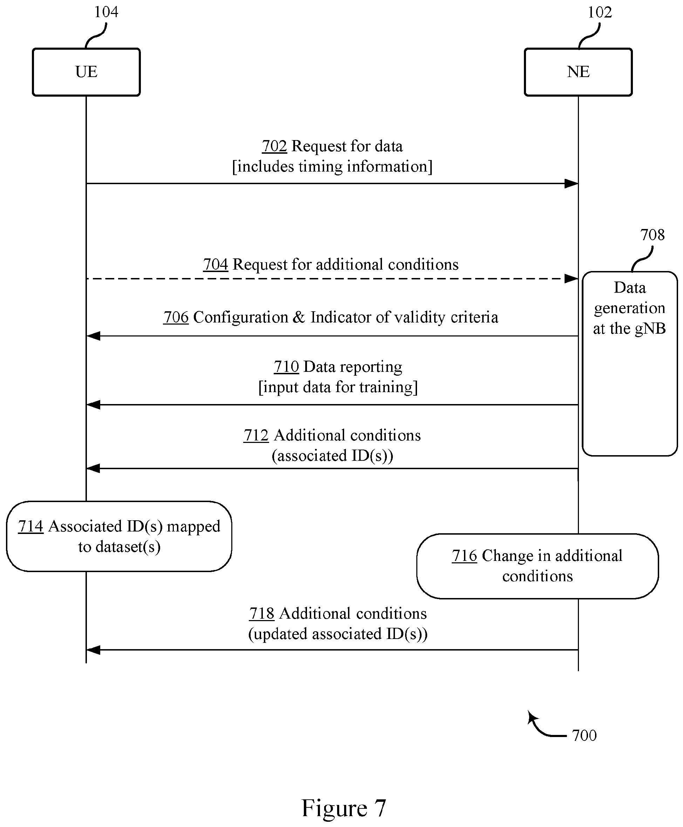

**Figure 7** illustrates a signaling diagram 700 according to aspects of the present disclosure. In the signaling diagram 700, at 702 a UE 104 can send to the NE 102 a request for data (e.g., timing information), at 704 the UE 104 can send a request for network side additional conditions, and at 706 the UE 104 can receive from the NE 102 a configuration for the additional conditions. At 708 the NE 102 can perform data generation (e.g., dataset(s) for AI/ML LCM) and at 710 the NE 102 can send the data for model training. At 712 the NE 102 may send to the UE 104 network side additional conditions after the dataset is sent. At 714 the UE 104 can perform mapping of received dataset(s) to associated IDs received from the NE 102. In implementations at 716 a change in additional conditions can occur at the NE 102 and at 718 the NE 102 can communicate changed network side additional conditions. In implementations the signaling diagram 700 can be applicable when data collection is taking place online.

In implementations the NE 102 can send one or more indicators of validity area (e.g., validity criterion) of the additional conditions (network context information) to the UE 104. In at least one implementation, such indicators can be transmitted via RRC signaling by the NE 102. Alternatively or additionally, the indicators of validity area may be included in a message via an additional MAC CE and/or in a DCI. The indicators of the validity area of the additional conditions (network context information) may be sent together (e.g. jointly) with the identifiers of the additional conditions (network context information). Additionally, the identifiers of the additional conditions (network context information) may be sent along (e.g., jointly) with the dataset. Alternatively or additionally, indicators of the validity area of the additional conditions (network context information) may be sent individually in a separate message.

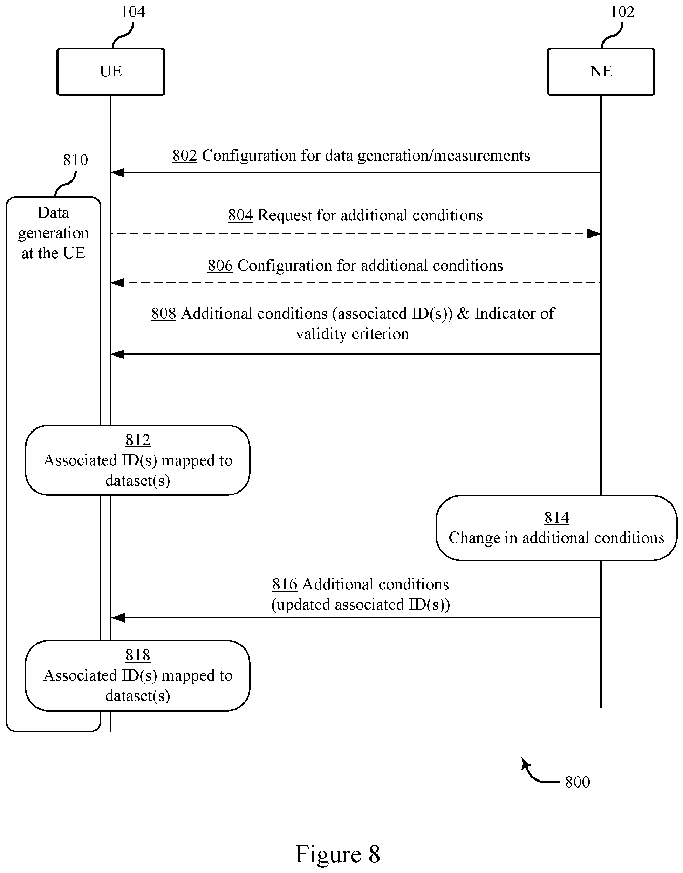

**Figure 8** illustrates a signaling diagram 800 according to aspects of the present disclosure. In the signaling diagram 800 such as for a UE side model, data (e.g., dataset) may be generated at the UE 104 and independent of input from the NE 104. For instance, at 802 the UE can receive from the NE 102 configuration for data measurements, at 804 the UE 104 may request network additional conditions (e.g., associated IDs) from the NE 102, at 806 the NE 102 can send configuration for additional conditions to the UE 104, and at 808 the NE 102 can send additional conditions to the UE 104. At 810 the UE 104 can perform data generation (e.g., for datasets) and at 812 the associated IDs are mapped to the dataset directly by the UE 104 and the associated IDs are stored as metadata of the respective model. At 814 a change in additional conditions may occur at the NE 102 and at 816 the NE 102 may send updated associated IDs. At 818 and based at least in part on the updated associated IDs, the UE 104 may map the updated associated IDs to the dataset the updated associated IDs can be stored as metadata of the respective model. An update in additional conditions can be applicable when the data collection is taking place online.

In implementations and based at least in part on the validity area of additional conditions (e.g., context information), an indicator for the validity area can be sent along with the associated IDs for additional conditions by the NE 102 to the UE 104. Alternatively or additionally, the indicator of the validity area of the additional conditions can be sent by the NE 102 to the UE 104 individually in the initial phase of data collection. For example, if the validity area is fixed, the indication can be provided along with the configuration for additional conditions, before sending associated IDs, and/or before sending the dataset itself. Such implementations can reduce the signaling overhead of the validity area indicator tagged along with the dataset or additional conditions, as in most cases validity area may be static/semi-static and may not change frequently.

In implementations, for data generation and reporting, a minimization of drive test (MDT) framework can be utilized and extended. For instance, two functionality mode options can be implemented, e.g., immediate MDT for the UE in RRC CONNECTED state and logged MDT for the UE in idle mode. In at least one implementation, RRC signaling such as the measurement reporting framework can be extended for data reporting and reporting of additional conditions. In another implementation, additional conditions may be reported via UE assistance information which can be more flexible for dynamic information. In an alternative or additional implementation, LTE positioning protocol (LPP) signaling can be used for use cases such as positioning for reporting information. If the additional conditions in reference to the data report do not change frequently, one-time reporting of additional conditions can be implemented which is associated with a burst of data being reported. Alternatively, the additional conditions can be reported along with the data report.

The indicator of validity area of additional conditions/context from a node (e.g., UE) can be transmitted via a RRC signaling mechanism. Alternatively or additionally, an additional MAC CE can be used for reporting this indicator of validity area. In implementations, the indicator can be sent using a UEAssistanceInformation (UAI) framework. The indicators of the validity area of the additional conditions (UE context information) may be sent together with the identifiers of the additional conditions (UE context information). Additionally, the identifiers of the additional conditions (UE context information) may be sent along with the dataset. Alternatively or alternatively, indicators of the validity area of the additional conditions (UE context information) may be sent individually in a separate message.

Implementations described in the present disclosure also include signaling mechanisms for exchanging information for the selection of a model and/or for determining the applicability of functionality during an inference phase of a network side model. Information referring to these conditions, for example, in the form of identifiers (associated IDs), can be exchanged between the UE and NE during the data collection phase for training.

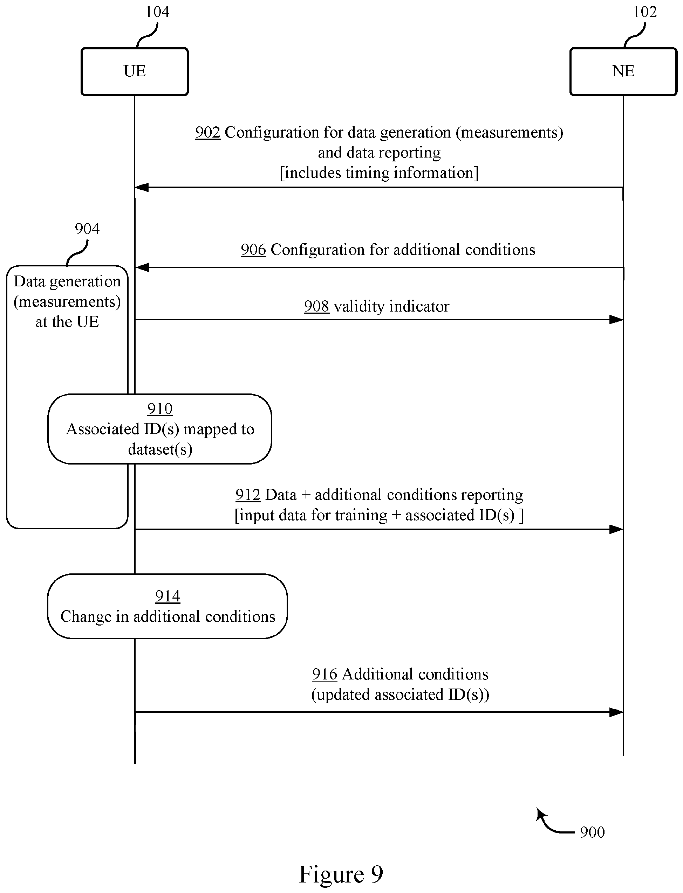

**Figure 9** illustrates a signaling diagram 900 in accordance with aspects of the present disclosure. At 902 the NE 102 configures the UE 104 for data generation (e.g., measurements) and for reporting data (e.g., measurements), in which the configuration may contain timing information that indicates the duration of validity of the configuration. The configuration may contain a configuration for reporting additional conditions of the UE 104 (e.g., UE side context information) to the NE 102 and may include a binary command to trigger a reporting of additional conditions by the UE 104. Further, the reporting may be configured to be periodic, aperiodic, and/or event-triggered such as based on changes in UE side additional conditions. At 904 the UE 104 can perform data generation via measurements, which can be a continuous process that is based at least in part on the timing information received in the configuration for data generation and/or measurement.

At 906 the UE 104 receives from the NE 102 configuration for additional conditions and data generation and at 908 the UE 104 sends a validity indicator (e.g., for a validity area and/or validity group) to the NE 102. At 910 the UE 104 performs a mapping of the measurements (generated dataset) to certain identifiers of UE-side additional conditions (associated IDs). The mapping to associated IDs can be for each dataset or a group of datasets. In response to the received configuration, at 912 the UE 104 sends to the NE 102 the requested data (e.g., measurements) in a data reporting message e.g., measurement report, along with the respective associated IDs if requested. At 914 a change in additional conditions may occur at the UE 104 and at 916 the UE 104 may communicate the additional conditions along with updated associated IDs to the NE 102.

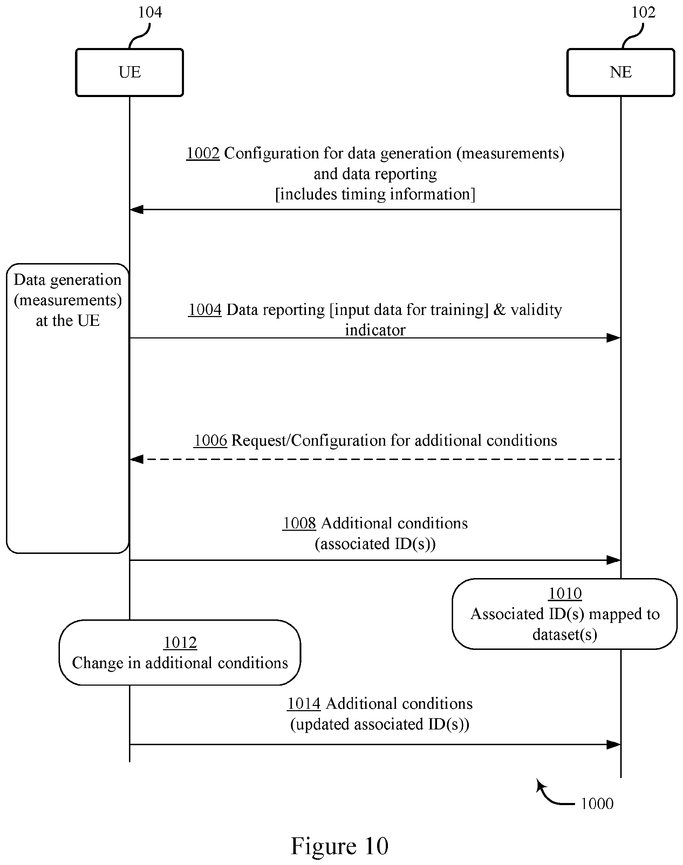

**Figure 10** illustrates a signaling diagram 1000 in accordance with aspects of the present disclosure. At 1002 the NE 102 configures the UE 104 for data generation (measurements) and reporting and in response at 1004 the UE 104 sends to the NE 102 the requested data as per the configuration in a data reporting message e.g., measurement report. At 1006 the NE 102 may send a request for additional conditions requesting the UE 104 to report its additional conditions. In response to the request, at 1008 the UE 104 may send its associated IDs for the UE side additional conditions. At 1010 the NE 102 can map the associated IDs to the dataset received at 1004 in the data reporting message. At 1012 a change in additional conditions may occur at the UE 104 and at 1014 the UE 104 may communicate the additional conditions along with updated associated IDs to the NE 102.

In at least some implementations, if the content and/or parameters of additional conditions have full and/or partial visibility and are thus specified, a request and/or configuration for additional conditions may include at least one or more parameters of the additional conditions. In response to such implementations, the UE 104 can send its associated IDs for the respective parameters received in the configuration for additional conditions. Alternatively or additionally, the UE 104 can respond with its associated IDs, which can include additional associated IDs referring to confidential information along with the associated IDs for the parameters received in the configuration.

In at least some implementations, the UE 104 can report a single identifier that represents a set of its associated IDs. The mapping of associated IDs to a single ID can be specified such that the identifier can be interpreted by different nodes, cells, and/or vendors to enable consistency in the interpretation of additional conditions, such as discussed above.

In at least some implementations, for information privacy between nodes (e.g., NE and UE), node-specific associated IDs can be exchanged which can be stored by another node as part of the metadata of a model. Node specific associated IDs can indicate that each node may generate random identifiers as associated IDs, association of which to additional conditions may not be interpretable by the other node. In at least some implementations the associated IDs exchanged during the data collection phase can be stored at a node (e.g., during the training of a model) as metadata of the model. The associated IDs can be retrieved during the inference phase for a selection of the model and/or to determine the applicability of a functionality based on the additional conditions for which the model was trained.

In at least some implementations the NE 102 may configure the UE 104 to report all or part of the UEs additional conditions. Based at least in part on the configuration received from the NE 102, the UE 104 can report to the NE 102 its identifiers (e.g., associated IDs) of the additional conditions. The following represent some examples for the UE 104 reporting its identifiers: (a) UE can report associated IDs for all UE additional conditions; (b) UE reports associated IDs for some UE additional conditions; (c) UE reports associated IDs for all UE additional conditions relevant to a particular functionality; (d) UE reports associated IDs for only non-confidential additional conditions; (e) UE reports combination of associated IDs for non-confidential and confidential additional conditions.

In at least some implementations, based at least in part on the validity area of additional conditions and/or context, an indicator for the validity area can be sent along with the associated IDs for UE side additional conditions. Alternatively or additionally, the indicator of the validity area of the UE-side additional conditions can be sent individually in the initial phase of data collection. For example, if the validity area such as validity of additional conditions is per vendor, the indication can be provided after receiving the configuration for additional conditions or before sending associated IDs or before sending the dataset. This can reduce the signaling overhead of the validity area indicator tagged along with the dataset or additional conditions, as in most cases validity area may be static/semi-static, e.g., not subject to change frequently.

In implementations, for data generation and reporting, a MDT framework can be utilized and extended. For instance, two functionality mode options can be implemented, e.g., immediate MDT for the UE in RRC CONNECTED state and logged MDT for the UEs in idle mode. In one implementation, RRC signaling such as the measurement reporting framework can be extended for data reporting and reporting of additional conditions. In another implementation, additional conditions may be reported via UE assistance information which can be more flexible for dynamic information. In an alternative or additional implementation, LPP signaling can be used for use cases such as positioning for reporting information. If the additional conditions in reference to the data report do not change frequently, one-time reporting of additional conditions can be implemented which is associated with a burst of data being reported. Alternatively, the additional conditions can be reported along with the data report.

The present disclosure also describes implementations for conditions and additional conditions for AI/ML in mobility scenarios. In mobility scenarios for a UE sided model, the UE may receive at least a portion of context information (e.g., additional conditions) from the network such that consistency in training and inference can be achieved while maintaining the confidentiality of privacy-sensitive information. The UE may request information and/or data from the network for model training and/or inference. As described throughout this disclosure, the consistency of network side additional conditions may be at the level of per cell, per vendor, and/or a predefined group of cells.

In at least some implementations, the exchange of information regarding additional conditions and the indicator of validity area during mobility for the UE sided model is discussed. This exchange of information can be based on the consistency of additional conditions among different cells and/or vendors.

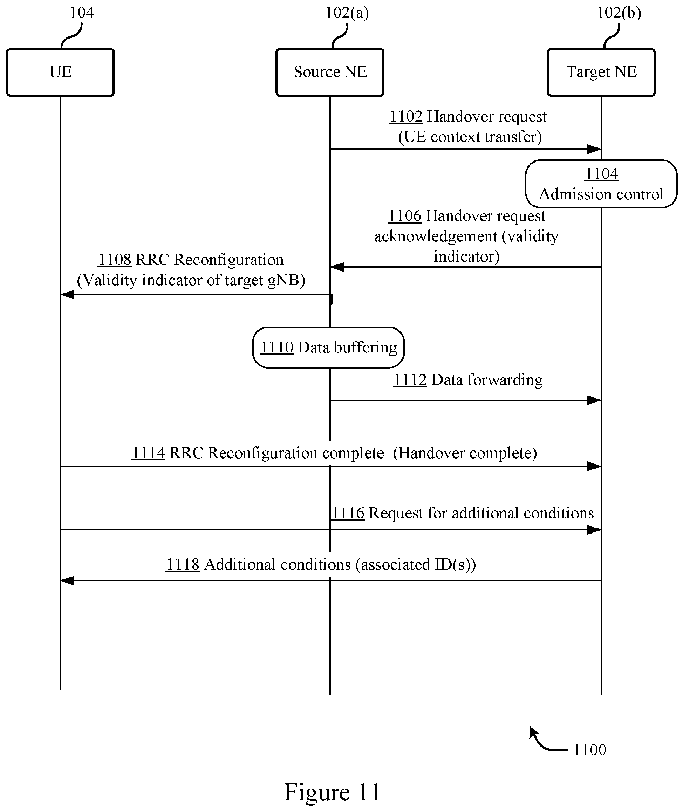

**Figure 11** illustrates a signaling diagram 1100 in accordance with aspects of the present disclosure. The signaling diagram 1100 includes a UE 104, a source NE 102(a)(e.g., a NE to which the UE 104 is currently RRC connected), and a target NE 102(b) to which a handover of the UE 104 is to be performed. In the signaling diagram 1100, at 1102 the source NE 102(a) communicates a handover request to the target NE 102(b) to initiate a handover of the UE 104 to the target NE 102(b). At 1104 the target NE 102(b) performs admission control to determine whether to allow the handover and at 1106 the target NE 102(b) communicates a handover request acknowledgement to the source NE 102(a) including a validity indicator of its additional conditions, e.g., context information. At 1108 the source NE 102(a) may forward the validity indicator received from the target NE 102(b) to the UE 104. In at least one implementation, the source NE 102(a) may send the validity indicator of additional conditions of the UE 104 in an RRC reconfiguration message. This can enable the UE 104 to compare the previous validity indicator of its source NE 102(a) to the target NE 102(b) at an early stage before establishing the RRC connection to the target NE 102(b). For instance, each UE sided model can be trained for a specific scenario differentiated based on the consistency of network side additional conditions. At 1110 the source NE 102(a) can perform data buffering and at 1112 can perform data forwarding to the target NE 102(b). At 1114 the UE 104 can communicate a handover complete message to the target NE 102(b), e.g., an RRC reconfiguration complete message. After completion of the RRC reconfiguration, at 1116 the UE 104 may request the target NE 102(b) for additional conditions and in response at 1118 the target NE 102(b) may send to the UE 104 its additional conditions, e.g., in the form of associated IDs.

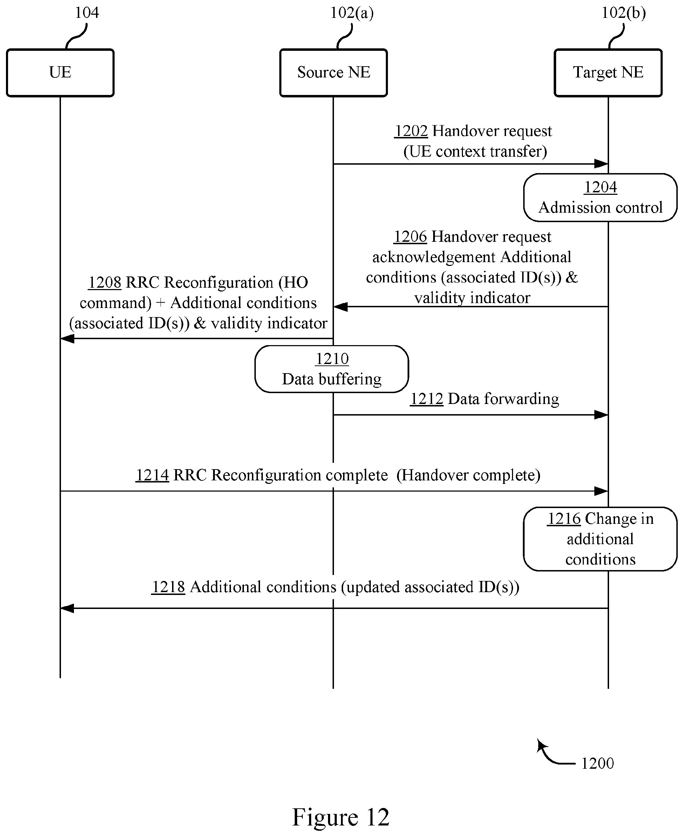

**Figure 12** illustrates an example signaling diagram 1200 in accordance with aspects of the present disclosure. In the signaling diagram 1200, at 1202 the source NE 102(a) communicates a handover request to the target NE 102(b) to initiate a handover of the UE 104 to the target NE 102(b). At 1204 the target NE 102(b) performs admission control to determine whether to allow the handover and at 1206 the target NE 102(b) communicates a handover request acknowledgement to the source NE 102(a) including its additional conditions in the form of associated IDs at the time of handover acknowledgement to the source NE 102(a). The handover acknowledgement may also include a validity indicator for its additional conditions.

At 1208 the source NE 102(a) can forward the additional conditions (e.g., the associated IDs) and optionally the validity indicator to the UE 104 during RRC reconfiguration. In some examples the handover request at 1202 may include a request for additional conditions from the target NE 102(b). Alternatively or additionally, the target NE 102(b) can send additional condition information proactively, e.g., after the admission control 1204. Thus, in some implementations the UE 104 may not explicitly request the additional conditions from the target NE 102(b). At 1210 the source NE 102(a) performs data buffering and at 1212 performs data forwarding to the target NE 102(b). At 1214 the UE 104 communicates a handover complete message (e.g., RRC reconfiguration complete message) to the target NE 102(b).

In implementations, after handover, at 1216 a change in additional conditions may occur at the target NE 102(b) and at 1218 (e.g., after the RRC connection is established) the target NE 102(b) can report its associated IDs for the additional conditions directly to the UE 104. During inference, an indicator of the validity area can be used by the UE 104 to determine if a functionality may be applicable for the target NE 102(b). If the source NE 102(a) and target NE 102(b) have consistency in their additional conditions, the likelihood of an applicable functionality in the source NE 102(a) being applicable for the target NE 102(b) can be higher. A determination of whether a functionality is applicable for the target NE 102(b) may be performed after receiving the complete additional conditions in the form of associated IDs.

For mobility scenarios considering network side models, the network can configure the UE for data generation (e.g., measurements) and for reporting data (e.g., measurements), in which the configuration may contain timing

**EP 4 664 970 A1**

information that indicates the duration of validity of the configuration. The configuration may include a configuration for reporting additional conditions of the UE (UE side additional conditions) to the NE, and may include a binary command to trigger a reporting of additional conditions by the UE. Additionally, the reporting may be configured to be periodic, aperiodic, or event-triggered such as changes in UE side additional conditions. Based at least in part on the validity area of additional conditions and/or context, the indicator for the validity area can be sent along with the associated IDs for UE side additional conditions and/or can be sent individually in the initial phase of data collection.

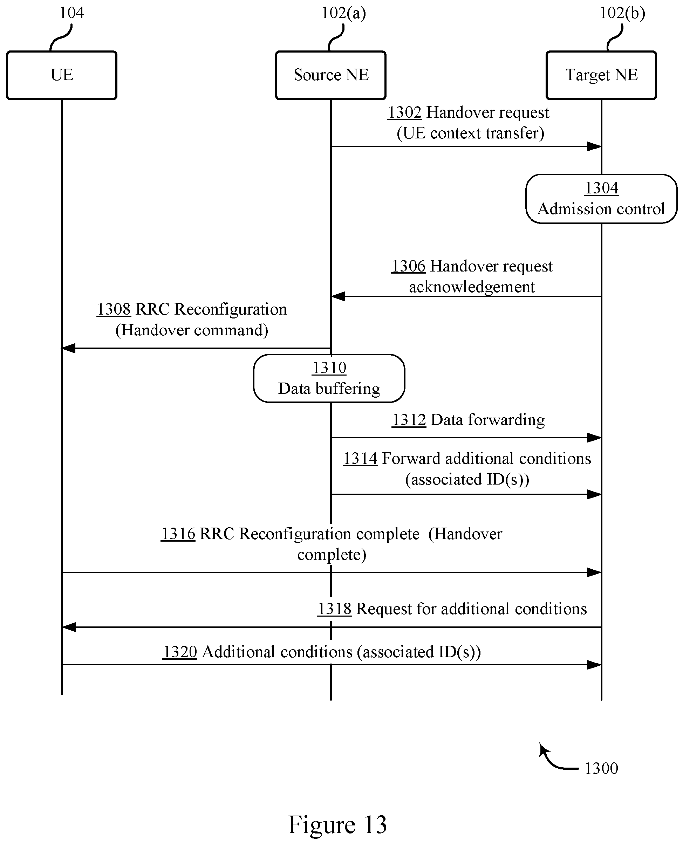

**Figure 13** illustrates an example signaling diagram 1300 in accordance with aspects of the present disclosure. The signaling diagram 1300, for instance, illustrates an example for exchange of information regarding additional conditions and the indicator of validity area during mobility for network sided models.

In the signaling diagram 1300, at 1302 the source NE 102(a) communicates a handover request to the target NE 102(b) to initiate a handover of the UE 104 to the target NE 102(b). At 1304 the target NE 102(b) performs admission control to determine whether to allow the handover and at 1306 the target NE 102(b) communicates a handover request acknowledgement to the source NE 102(a). At 1308 the source NE 102(a) communicates a handover command to the UE 104, at 1310 the source NE 102(a) performs data buffering, and at 1312 the source NE 102(a) performs data forwarding to the target NE 102(b). At 1314 (e.g., after handover), the source NE 102(a) forwards the information regarding additional conditions (e.g., most recently updated additional conditions) of the UE 104 (e.g., associated IDs) to the target NE 102(b) after the RRC configuration (handover command). The source NE 102(a) may also communicate to the target NE 102(b) the indicator of the validity area of the UE side additional conditions. In an alternative or additional implementation, when the RRC reconfiguration and/or handover is complete at 1316, at 1318 the target NE 102(b) may explicitly request that the UE 104 provide additional conditions. In response, at 1320 the UE 104 can report its additional conditions in the form of associated IDs and the validity indicator (if applicable) to the target NE 102(b) which is now a serving NE, e.g., after handover.

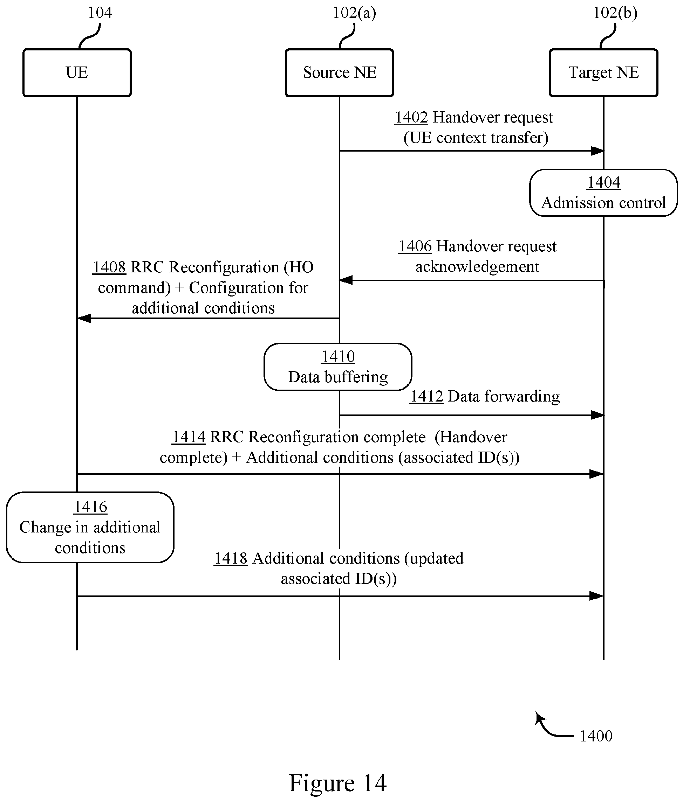

**Figure 14** illustrates an example signaling diagram 1400 in accordance with aspects of the present disclosure. The signaling diagram 1400, for instance, illustrates an example for exchange of information regarding additional conditions and the indicator of validity area during mobility for network sided models.

In the signaling diagram 1400, at 1402 the source NE 102(a) communicates a handover request to the target NE 102(b) to initiate a handover of the UE 104 to the target NE 102(b). At 1404 the target NE 102(b) performs admission control to determine whether to allow the handover and at 1406 the target NE 102(b) communicates a handover request acknowledgement to the source NE 102(a). At 1408 the source NE 102(a) communicates a handover command to the UE 104. For instance, the handover command represents an RRC reconfiguration message that configures the UE 104 for reporting additional conditions. An additional information element (IE) in the RRC reconfiguration message can be introduced for this purpose, which may include a list of parameters for additional conditions to be reported and a validity indicator. Alternatively, the RRC reconfiguration message may contain a binary command to report additional additions. Additionally, the reporting may be configured to be periodic, aperiodic, and/or event-triggered such as based on changes in UE side additional conditions.

According to implementations the signaling of additional conditions and the validity indicator can be applicable to different phases of AI/ML LCM such as data collection for training, inference, etc. Thus, inter-NE coordination can be utilized such as based on the type of information to be exchanged among the NE. For instance, the UE side additional conditions can be forwarded from the source NE 102(a) to the target NE 102(b) if the source NE 102(a) and the target NE 102(b) belong to a same vendor or a same group predefined based on criteria. Thus, the validity area of the network may also be used to decide if and what information can be exchanged among the neighbor cells.

Further to the signaling diagram 1400, at 1410 the source NE 102(a) performs data buffering, and at 1412 the source NE 102(a) performs data forwarding to the target NE 102(b). At 1414 the UE 104 communicates an RRC reconfiguration complete message to the target NE 102(b), which may include additional conditions and associated IDs and/or validity area information. At 1416 a change in additional conditions at the UE 104 may occur and at 1418 the UE 104 may communicate updated additional conditions and associated IDs to the target NE 102(b).

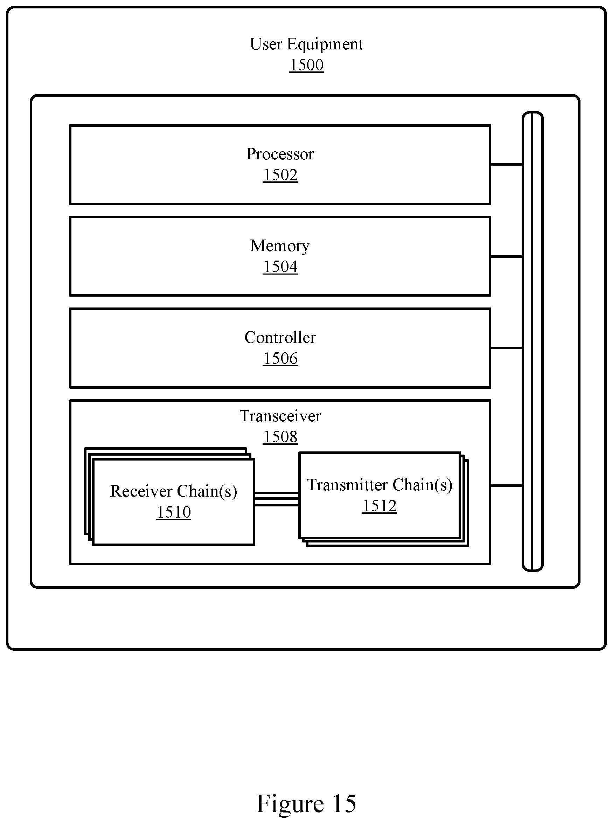

**Figure 15** illustrates an example of a UE 1500 in accordance with aspects of the present disclosure. The UE 1500 may include a processor 1502, a memory 1504, a controller 1506, and a transceiver 1508. The processor 1502, the memory 1504, the controller 1506, or the transceiver 1508, or various combinations thereof or various components thereof may be examples of means for performing various aspects of the present disclosure as described herein. These components may be coupled (e.g., operatively, communicatively, functionally, electronically, electrically) via one or more interfaces.

The processor 1502, the memory 1504, the controller 1506, or the transceiver 1508, or various combinations or components thereof may be implemented in hardware (e.g., circuitry). The hardware may include a processor, a digital signal processor (DSP), an application-specific integrated circuit (ASIC), or other programmable logic device, or any combination thereof configured as or otherwise supporting a means for performing the functions described in the present disclosure.

The processor 1502 may include an intelligent hardware device (e.g., a general-purpose processor, a DSP, a CPU, an ASIC, an FPGA, or any combination thereof). In some implementations, the processor 1502 may be configured to operate the memory 1504. In some other implementations, the memory 1504 may be integrated into the processor 1502. The processor 1502 may be configured to execute computer-readable instructions stored in the memory 1504 to cause the UE 1500 to perform various functions of the present disclosure.

The memory 1504 may include volatile or non-volatile memory. The memory 1504 may store computer-readable, computer-executable code including instructions when executed by the processor 1502 cause the UE 1500 to perform various functions described herein. The code may be stored in a non-transitory computer-readable medium such as the memory 1504 or another type of memory. Computer-readable media includes both non-transitory computer storage media and communication media including any medium that facilitates transfer of a computer program from one place to another. A non-transitory storage medium may be any available medium that may be accessed by a general-purpose or special-purpose computer.

In some implementations, the processor 1502 and the memory 1504 coupled with the processor 1502 may be configured to cause the UE 1500 to perform one or more of the functions described herein (e.g., executing, by the processor 1502, instructions stored in the memory 1504). For example, the processor 1502 may support wireless communication at the UE 1500 in accordance with examples as disclosed herein.

The UE 1500 may be configured to or operable to support a means for receiving an indication of one or more validity criterion for a portion of network context information; and storing the indication of the one or more validity criterion for the portion of the network context information as part of learning model data.

Additionally, the UE 1500 may be configured to support any one or combination of where the indication of the one or more validity criterion for the portion of the network context information includes at least one of vendor specific validity information, cell specific validity information, or at least one RAN notification area; the indication of the one or more validity criterion for the portion of the network context information includes one or more nodes for applying a same interpretation of the network context information; receiving one or more identifiers of the network context information; one or more of: jointly receiving the one or more identifiers of the network context information and the indication of the one or more validity criterion for the portion of the network context information; or jointly receiving the one or more identifiers of the network context information and a dataset for learning model life cycle management; the indication of the one or more validity criterion for the portion of the network context information is received aperiodically prior to a received dataset for learning model life cycle management; transmitting capability information that indicates whether the UE supports learning model-enabled measurement and reporting.

Additionally, or alternatively, the UE 1500 may support at least one memory (e.g., the memory 1504) and at least one processor (e.g., the processor 1502) coupled with the at least one memory and configured to cause the UE to receive an indication of one or more validity criterion for a portion of network context information; and store the indication of the one or more validity criterion for the portion of the network context information as part of learning model data.

Additionally, the UE 1500 may be configured to support any one or combination of where the indication of the one or more validity criterion for the portion of the network context information includes at least one of vendor specific validity information, cell specific validity information, or at least one RAN notification area; the indication of the one or more validity criterion for the portion of the network context information includes one or more nodes for applying a same interpretation of the network context information; the at least one processor is configured cause the UE to receive one or more identifiers of the network context information; the at least one processor is configured cause the UE to one or more of: jointly receive the one or more identifiers of the network context information and the indication of the one or more validity criterion for the portion of the network context information; or jointly receive the one or more identifiers of the network context information and a dataset for learning model life cycle management; the indication of the one or more validity criterion for the portion of the network context information is received aperiodically prior to a received dataset for learning model life cycle management; the at least one processor is configured cause the UE to transmit capability information that indicates whether the UE supports learning model-enabled measurement and reporting.

The UE 1500 may be configured to or operable to support a means for generating an indication of one or more validity criterion for a portion of UE context information; and transmitting the indication of one or more validity criterion for the portion of UE context information.

Additionally, the UE 1500 may be configured to support any one or combination of receiving configuration information for data collection of a dataset for learning model life cycle management, wherein the configuration information includes timing information for a duration of validity of the configuration information for data collection; the indication of the one or more validity criterion for the portion of UE context information includes one or more of vendor specific validity information or UE specific validity information; the UE context information includes one or more of antenna port layout information for the UE, UE battery information, UE movement data, or one or more UE hardware specifications.

Additionally, or alternatively, the UE 1500 may support at least one memory (e.g., the memory 1504) and at least one processor (e.g., the processor 1502) coupled with the at least one memory and configured to cause the UE to generate an indication of one or more validity criterion for a portion of UE context information; and transmit the indication of one or more validity criterion for the portion of UE context information.

Additionally, the UE 1500 may be configured to support any one or combination of the at least one processor is configured to receive configuration information for data collection of a dataset for learning model life cycle management, wherein the configuration information includes timing information for a duration of validity of the configuration information for data collection; the indication of the one or more validity criterion for the portion of UE context information includes one or more of vendor specific validity information or UE specific validity information; the UE context information includes one or more of antenna port layout information for the UE, UE battery information, UE movement data, or one or more UE hardware specifications.

The controller 1506 may manage input and output signals for the UE 1500. The controller 1506 may also manage peripherals not integrated into the UE 1500. In some implementations, the controller 1506 may utilize an operating system such as iOS®, ANDROID®, WINDOWS®, or other operating systems. In some implementations, the controller 1506 may be implemented as part of the processor 1502.

In some implementations, the UE 1500 may include at least one transceiver 1508. In some other implementations, the UE 1500 may have more than one transceiver 1508. The transceiver 1508 may represent a wireless transceiver. The transceiver 1508 may include one or more receiver chains 1510, one or more transmitter chains 1512, or a combination thereof.

A receiver chain 1510 may be configured to receive signals (e.g., control information, data, packets) over a wireless medium. For example, the receiver chain 1510 may include one or more antennas to receive a signal over the air or wireless medium. The receiver chain 1510 may include at least one amplifier (e.g., a low-noise amplifier (LNA)) configured to amplify the received signal. The receiver chain 1510 may include at least one demodulator configured to demodulate the receive signal and obtain the transmitted data by reversing the modulation technique applied during transmission of the signal. The receiver chain 1510 may include at least one decoder for decoding the demodulated signal to receive the transmitted data.

A transmitter chain 1512 may be configured to generate and transmit signals (e.g., control information, data, packets). The transmitter chain 1512 may include at least one modulator for modulating data onto a carrier signal, preparing the signal for transmission over a wireless medium. The at least one modulator may be configured to support one or more techniques such as amplitude modulation (AM), frequency modulation (FM), or digital modulation schemes like phase-shift keying (PSK) or quadrature amplitude modulation (QAM). The transmitter chain 1512 may also include at least one power amplifier configured to amplify the modulated signal to an appropriate power level suitable for transmission over the wireless medium. The transmitter chain 1512 may also include one or more antennas for transmitting the amplified signal into the air or wireless medium.

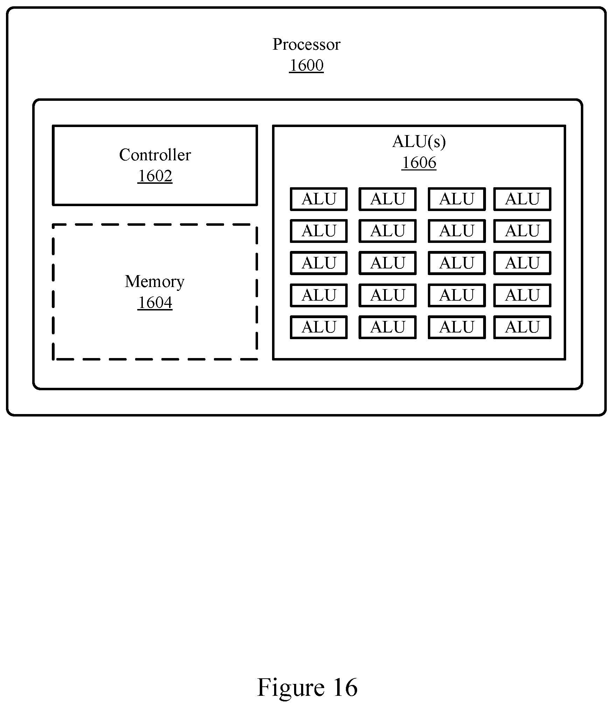

**Figure 16** illustrates an example of a processor 1600 in accordance with aspects of the present disclosure. The processor 1600 may be an example of a processor configured to perform various operations in accordance with examples as described herein. The processor 1600 may include a controller 1602 configured to perform various operations in accordance with examples as described herein. The processor 1600 may optionally include at least one memory 1604, which may be, for example, an L1/L2/L3 cache. Additionally, or alternatively, the processor 1600 may optionally include one or more arithmetic-logic units (ALUs) 1606. One or more of these components may be in electronic communication or otherwise coupled (e.g., operatively, communicatively, functionally, electronically, electrically) via one or more interfaces (e.g., buses).

The processor 1600 may be a processor chipset and include a protocol stack (e.g., a software stack) executed by the processor chipset to perform various operations (e.g., receiving, obtaining, retrieving, transmitting, outputting, forwarding, storing, determining, identifying, accessing, writing, reading) in accordance with examples as described herein. The processor chipset may include one or more cores, one or more caches (e.g., memory local to or included in the processor chipset (e.g., the processor 1600) or other memory (e.g., random access memory (RAM), read-only memory (ROM), dynamic RAM (DRAM), synchronous dynamic RAM (SDRAM), static RAM (SRAM), ferroelectric RAM (FeRAM), magnetic RAM (MRAM), resistive RAM (RRAM), flash memory, phase change memory (PCM), and others).

The controller 1602 may be configured to manage and coordinate various operations (e.g., signaling, receiving, obtaining, retrieving, transmitting, outputting, forwarding, storing, determining, identifying, accessing, writing, reading) of the processor 1600 to cause the processor 1600 to support various operations in accordance with examples as described herein. For example, the controller 1602 may operate as a control unit of the processor 1600, generating control signals that manage the operation of various components of the processor 1600. These control signals include enabling or disabling functional units, selecting data paths, initiating memory access, and coordinating timing of operations.

The controller 1602 may be configured to fetch (e.g., obtain, retrieve, receive) instructions from the memory 1604 and determine subsequent instruction(s) to be executed to cause the processor 1600 to support various operations in accordance with examples as described herein. The controller 1602 may be configured to track memory addresses of instructions associated with the memory 1604. The controller 1602 may be configured to decode instructions to determine the operation to be performed and the operands involved. For example, the controller 1602 may be configured to interpret the instruction and determine control signals to be output to other components of the processor 1600 to cause the processor 1600 to support various operations in accordance with examples as described herein. Additionally, or alternatively, the controller 1602 may be configured to manage flow of data within the processor 1600. The controller 1602 may be configured to control transfer of data between registers, ALUs 1606, and other functional units of the processor 1600.

The memory 1604 may include one or more caches (e.g., memory local to or included in the processor 1600 or other memory, such as RAM, ROM, DRAM, SDRAM, SRAM, MRAM, flash memory, etc. In some implementations, the memory 1604 may reside within or on a processor chipset (e.g., local to the processor 1600). In some other implementations, the memory 1604 may reside external to the processor chipset (e.g., remote to the processor 1600).

The memory 1604 may store computer-readable, computer-executable code including instructions that, when executed by the processor 1600, cause the processor 1600 to perform various functions described herein. The code may be stored in a non-transitory computer-readable medium such as system memory or another type of memory. The controller 1602 and/or the processor 1600 may be configured to execute computer-readable instructions stored in the memory 1604 to cause the processor 1600 to perform various functions. For example, the processor 1600 and/or the controller 1602 may be coupled with or to the memory 1604, the processor 1600, and the controller 1602, and may be configured to perform various functions described herein. In some examples, the processor 1600 may include multiple processors and the memory 1604 may include multiple memories. One or more of the multiple processors may be coupled with one or more of the multiple memories, which may, individually or collectively, be configured to perform various functions herein.

The one or more ALUs 1606 may be configured to support various operations in accordance with examples as described herein. In some implementations, the one or more ALUs 1606 may reside within or on a processor chipset (e.g., the processor 1600). In some other implementations, the one or more ALUs 1606 may reside external to the processor chipset (e.g., the processor 1600). One or more ALUs 1606 may perform one or more computations such as addition, subtraction, multiplication, and division on data. For example, one or more ALUs 1606 may receive input operands and an operation code, which determines an operation to be executed. One or more ALUs 1606 may be configured with a variety of logical and arithmetic circuits, including adders, subtractors, shifters, and logic gates, to process and manipulate the data according to the operation. Additionally, or alternatively, the one or more ALUs 1606 may support logical operations such as AND, OR, exclusive-OR (XOR), not-OR (NOR), and not-AND (NAND), enabling the one or more ALUs 1606 to handle conditional operations, comparisons, and bitwise operations.

The processor 1600 may support wireless communication in accordance with examples as disclosed herein. The processor 1600 may be configured to or operable to support at least one controller (e.g., the controller 1602) coupled with at least one memory (e.g., the memory 1604) and configured to cause the processor to receive an indication of one or more validity criterion for a portion of network context information; and store the indication of the one or more validity criterion for the portion of the network context information as part of learning model data.

Additionally, the processor 1600 may be configured to or operable to support any one or combination of where the indication of the one or more validity criterion for the portion of the network context information includes at least one of vendor specific validity information, cell specific validity information, or at least one RAN notification area; the indication of the one or more validity criterion for the portion of the network context information includes one or more nodes for applying a same interpretation of the network context information; the at least one controller is configured cause the processor to receive one or more identifiers of the network context information; the at least one controller is configured cause the processor to one or more of: jointly receive the one or more identifiers of the network context information and the indication of the one or more validity criterion for the portion of the network context information; or jointly receive the one or more identifiers of the network context information and a dataset for learning model life cycle management; the indication of the one or more validity criterion for the portion of the network context information is received aperiodically prior to a received dataset for learning model life cycle management; the at least one controller is configured cause the processor to transmit capability information that indicates whether a UE supports learning model-enabled measurement and reporting.

The processor 1600 may support wireless communication in accordance with examples as disclosed herein. The processor 1600 may be configured to or operable to support at least one controller (e.g., the controller 1602) coupled with at least one memory (e.g., the memory 1604) and configured to cause the processor to generate an indication of one or more validity criterion for a portion of UE context information; and transmit the indication of one or more validity criterion for the portion of UE context information.

Additionally, the processor 1600 may be configured to or operable to support any one or combination of the at least one controller is configured to cause the processor to receive configuration information for data collection of a dataset for learning model life cycle management, wherein the configuration information includes timing information for a duration of validity of the configuration information for data collection; the indication of the one or more validity criterion for the portion of UE context information includes one or more of vendor specific validity information or UE specific validity information; the UE context information includes one or more of antenna port layout information for the UE, UE battery information, UE movement data, or one or more UE hardware specifications.

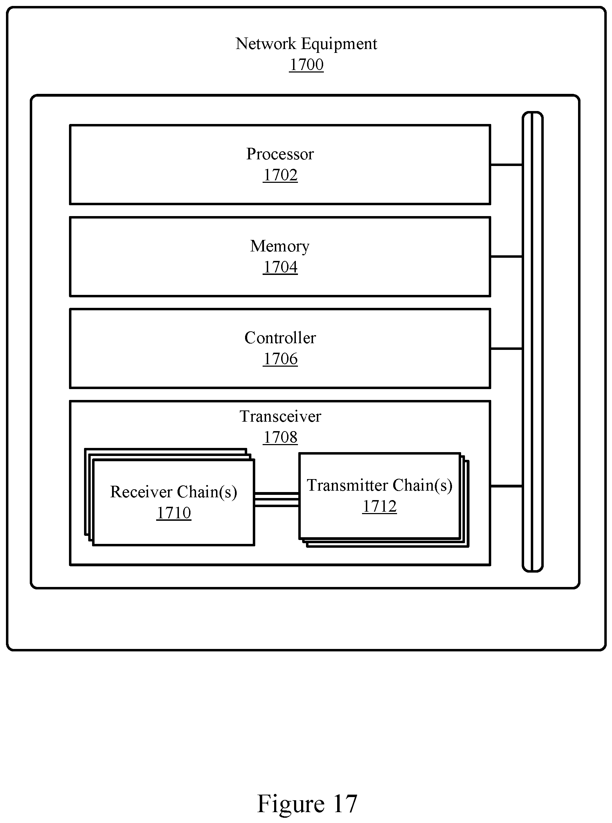

**Figure** 17 illustrates an example of a NE 1700 in accordance with aspects of the present disclosure. The NE 1700 may include a processor 1702, a memory 1704, a controller 1706, and a transceiver 1708. The processor 1702, the memory 1704, the controller 1706, or the transceiver 1708, or various combinations thereof or various components thereof may be examples of means for performing various aspects of the present disclosure as described herein. These components may be coupled (e.g., operatively, communicatively, functionally, electronically, electrically) via one or more interfaces.

The processor 1702, the memory 1704, the controller 1706, or the transceiver 1708, or various combinations or components thereof may be implemented in hardware (e.g., circuitry). The hardware may include a processor, a digital signal processor (DSP), an application-specific integrated circuit (ASIC), or other programmable logic device, or any combination thereof configured as or otherwise supporting a means for performing the functions described in the present disclosure.

The processor 1702 may include an intelligent hardware device (e.g., a general-purpose processor, a DSP, a CPU, an ASIC, an FPGA, or any combination thereof). In some implementations, the processor 1702 may be configured to operate the memory 1704. In some other implementations, the memory 1704 may be integrated into the processor 1702. The processor 1702 may be configured to execute computer-readable instructions stored in the memory 1704 to cause the NE 1700 to perform various functions of the present disclosure.

The memory 1704 may include volatile or non-volatile memory. The memory 1704 may store computer-readable, computer-executable code including instructions when executed by the processor 1702 cause the NE 1700 to perform various functions described herein. The code may be stored in a non-transitory computer-readable medium such as the memory 1704 or another type of memory. Computer-readable media includes both non-transitory computer storage media and communication media including any medium that facilitates transfer of a computer program from one place to another. A non-transitory storage medium may be any available medium that may be accessed by a general-purpose or special-purpose computer.

In some implementations, the processor 1702 and the memory 1704 coupled with the processor 1702 may be configured to cause the NE 1700 to perform one or more of the functions described herein (e.g., executing, by the processor 1702, instructions stored in the memory 1704).

For example, the processor 1702 may support wireless communication at the NE 1700 in accordance with examples as disclosed herein. The NE 1700 may be configured to or operable to support a means for generating an indication of one or more validity criterion for a portion of network context information; and transmitting the indication of one or more validity criterion for the portion of network context information.

Additionally, the NE 1700 may be configured to or operable to support any one or combination of where the indication of the one or more validity criterion for the portion of network context information includes at least one of vendor specific validity information, cell specific validity information, or at least one RAN notification area; transmitting one or more identifiers of the network context information; one or more of: jointly transmitting the one or more identifiers of the network context information and a dataset for learning model life cycle management; or jointly transmitting the one or more identifiers of the network context information and the indication of one or more validity criterion for the portion of the network context information; transmitting the indication of the one or more validity criterion for the portion of network context information aperiodically prior to a transmitted dataset for learning model life cycle management; the network context information includes one or more of at least one network deployment scenario information, beam shape information, codebook information, antenna array information, transmitter to remote unit mapping, or one or more antenna down tilt angles.

Additionally, or alternatively, the NE 1700 may support at least one memory (e.g., the memory 1704) and at least one processor (e.g., the processor 1702) coupled with the at least one memory and configured to cause the NE to generate an indication of one or more validity criterion for a portion of network context information; and transmit the indication of one or more validity criterion for the portion of network context information.

Additionally, the NE 1700 may be configured to support any one or combination of where the indication of the one or more validity criterion for the portion of network context information includes at least one of vendor specific validity information, cell specific validity information, or at least one RAN notification area; the at least one processor is configured cause the NE to transmit one or more identifiers of the network context information; the at least one processor is configured cause the NE to one or more of: jointly transmit the one or more identifiers of the network context information and a dataset for learning model life cycle management; or jointly transmit the one or more identifiers of the network context information and the indication of one or more validity criterion for the portion of the network context information; the at least one processor is configured cause the NE to transmit the indication of the one or more validity criterion for the portion of network context information aperiodically prior to a transmitted dataset for learning model life cycle management; the network context information includes one or more of at least one network deployment scenario information, beam shape information, codebook information, antenna array information, transmitter to remote unit mapping, or one or more antenna down tilt angles.

For example, the processor 1702 may support wireless communication at the NE 1700 in accordance with examples as disclosed herein. The NE 1700 may be configured to or operable to support a means for receiving an indication of one or more validity criterion for a portion of UE context information; and storing the indication of the one or more validity criterion for the portion of UE context information as part of learning model data.

Additionally, the NE 1700 may be configured to or operable to support any one or combination of the method further comprising transmitting configuration information for data collection of a dataset for learning model life cycle management, wherein the configuration information includes timing information for a duration of validity of the configuration information for data collection; receiving identifiers for the portion of the UE context information.

Additionally, or alternatively, the NE 1700 may support at least one memory (e.g., the memory 1704) and at least one processor (e.g., the processor 1702) coupled with the at least one memory and configured to cause the NE to receive an indication of one or more validity criterion for a portion of UE context information; and store the indication of the one or more validity criterion for the portion of UE context information as part of learning model data.

Additionally, the NE 1700 may be configured to support any one or combination of the at least one processor is configured to cause the NE to transmit configuration information for data collection of a dataset for learning model life cycle management, wherein the configuration information includes timing information for a duration of validity of the configuration information for data collection; the at least one processor is configured to cause the NE to receive identifiers for the portion of the UE context information.

The controller 1706 may manage input and output signals for the NE 1700. The controller 1706 may also manage peripherals not integrated into the NE 1700. In some implementations, the controller 1706 may utilize an operating system such as iOS®, ANDROID®, WINDOWS®, or other operating systems. In some implementations, the controller 1706 may be implemented as part of the processor 1702.

In some implementations, the NE 1700 may include at least one transceiver 1708. In some other implementations, the NE 1700 may have more than one transceiver 1708. The transceiver 1708 may represent a wireless transceiver. The transceiver 1708 may include one or more receiver chains 1710, one or more transmitter chains 1712, or a combination thereof.

A receiver chain 1710 may be configured to receive signals (e.g., control information, data, packets) over a wireless medium. For example, the receiver chain 1710 may include one or more antennas to receive a signal over the air or wireless medium. The receiver chain 1710 may include at least one amplifier (e.g., a low-noise amplifier (LNA)) configured to amplify the received signal. The receiver chain 1710 may include at least one demodulator configured to demodulate the receive signal and obtain the transmitted data by reversing the modulation technique applied during transmission of the signal. The receiver chain 1710 may include at least one decoder for decoding the demodulated signal to receive the transmitted data.

A transmitter chain 1712 may be configured to generate and transmit signals (e.g., control information, data, packets). The transmitter chain 1712 may include at least one modulator for modulating data onto a carrier signal, preparing the signal for transmission over a wireless medium. The at least one modulator may be configured to support one or more techniques such as amplitude modulation (AM), frequency modulation (FM), or digital modulation schemes like phase-shift keying (PSK) or quadrature amplitude modulation (QAM). The transmitter chain 1712 may also include at least one power amplifier configured to amplify the modulated signal to an appropriate power level suitable for transmission over the wireless medium. The transmitter chain 1712 may also include one or more antennas for transmitting the amplified signal into the air or wireless medium.

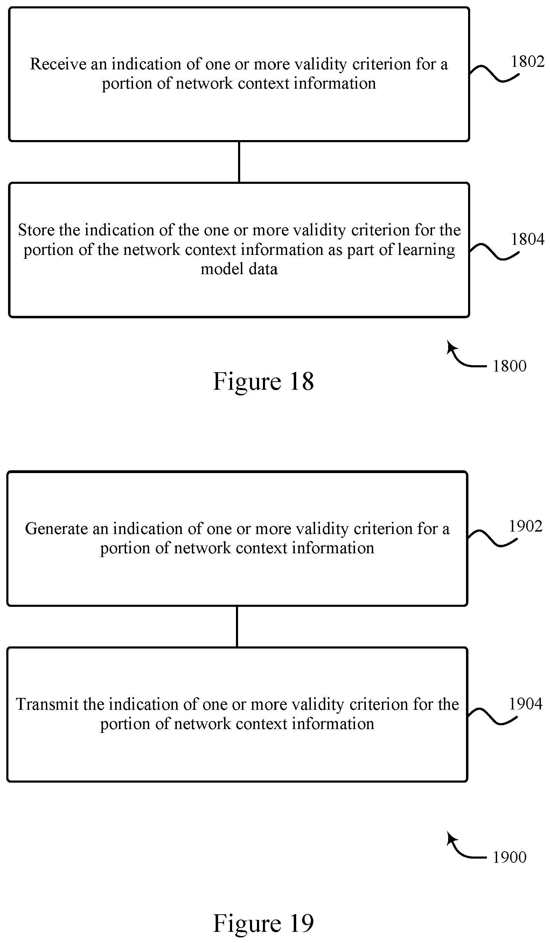

**Figure 18** illustrates a flowchart of a method 1800 in accordance with aspects of the present disclosure. The operations of the method may be implemented by a UE as described herein. In some implementations, the UE may execute a set of instructions to control the function elements of the UE to perform the described functions. It should be noted that the method described herein describes a possible implementation, and that the operations and the steps may be rearranged or otherwise modified and that other implementations are possible.

At 1802, the method may include receiving an indication of one or more validity criterion for a portion of network context information. The operations of 1802 may be performed in accordance with examples as described herein. In some implementations, aspects of the operations of 1802 may be performed by a UE as described with reference to Figure 15.

At 1804, the method may include storing the indication of the one or more validity criterion for the portion of the network context information as part of learning model data. The operations of 1804 may be performed in accordance with examples as described herein. In some implementations, aspects of the operations of 1804 may be performed by a UE as described with reference to Figure 15.

**Figure 19** illustrates a flowchart of a method 1900 in accordance with aspects of the present disclosure. The operations of the method may be implemented by a NE as described herein. In some implementations, the NE may execute a set of instructions to control the function elements of the NE to perform the described functions. It should be noted that the method described herein describes a possible implementation, and that the operations and the steps may be rearranged or otherwise modified and that other implementations are possible.

At 1902, the method may include generating an indication of one or more validity criterion for a portion of network context information. The operations of 1902 may be performed in accordance with examples as described herein. In some implementations, aspects of the operations of 1902 may be performed by a NE as described with reference to Figure 17.

At 1904, the method may include transmitting the indication of one or more validity criterion for the portion of network context information. The operations of 1904 may be performed in accordance with examples as described herein. In some implementations, aspects of the operations of 1904 may be performed by a NE as described with reference to Figure 17.

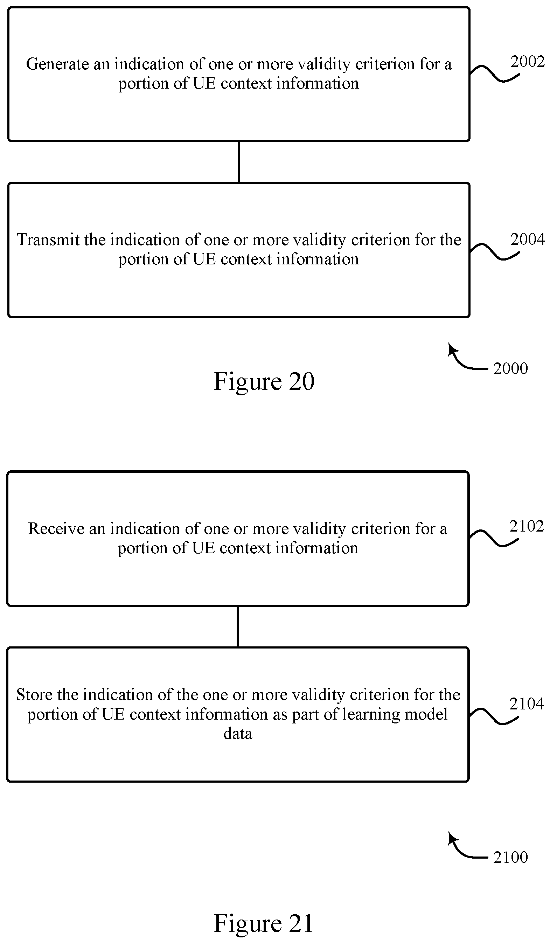

**Figure 20** illustrates a flowchart of a method 2000 in accordance with aspects of the present disclosure. The operations of the method may be implemented by a UE as described herein. In some implementations, the UE may execute a set of instructions to control the function elements of the UE to perform the described functions. It should be noted that the method described herein describes a possible implementation, and that the operations and the steps may be rearranged or otherwise modified and that other implementations are possible.

At 2002, the method may include generating an indication of one or more validity criterion for a portion of UE context information. The operations of 2002 may be performed in accordance with examples as described herein. In some implementations, aspects of the operations of 2002 may be performed by a UE as described with reference to Figure 15.

At 2004, the method may include transmitting the indication of one or more validity criterion for the portion of UE context information. The operations of 2004 may be performed in accordance with examples as described herein. In some implementations, aspects of the operations of 2004 may be performed by a UE as described with reference to Figure 15.

**Figure 21** illustrates a flowchart of a method 2100 in accordance with aspects of the present disclosure. The operations of the method may be implemented by a NE as described herein. In some implementations, the NE may execute a set of instructions to control the function elements of the NE to perform the described functions. It should be noted that the method described herein describes a possible implementation, and that the operations and the steps may be rearranged or otherwise modified and that other implementations are possible.

At 2102, the method may include receiving an indication of one or more validity criterion for a portion of UE context information. The operations of 2102 may be performed in accordance with examples as described herein. In some implementations, aspects of the operations of 2102 may be performed by a NE as described with reference to Figure 17.

At 2104, the method may include storing the indication of the one or more validity criterion for the portion of UE context information as part of learning model data. The operations of 2104 may be performed in accordance with examples as described herein. In some implementations, aspects of the operations of 2104 may be performed by a NE as described with reference to Figure 17.

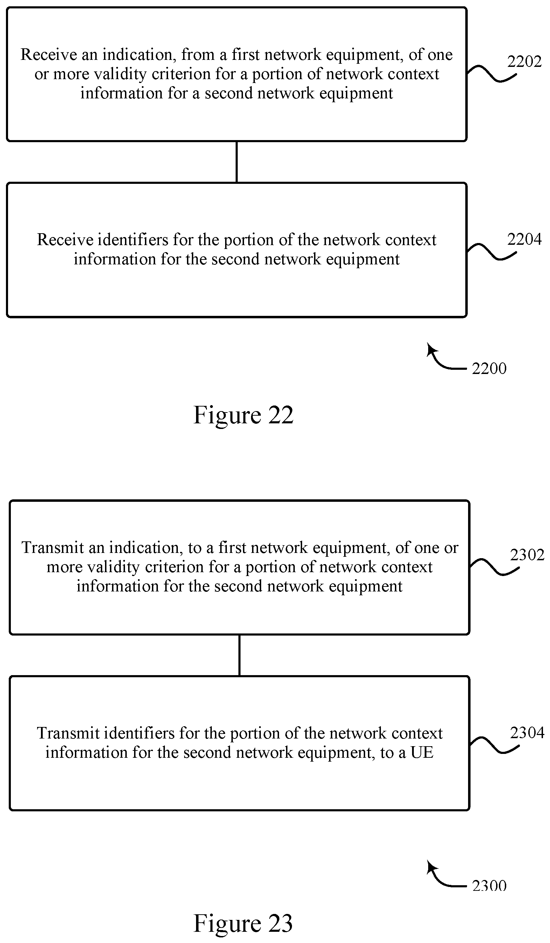

**Figure 22** illustrates a flowchart of a method 2200 in accordance with aspects of the present disclosure. The operations of the method may be implemented by a UE as described herein. In some implementations, the UE may execute a set of instructions to control the function elements of the UE to perform the described functions. It should be noted that the method described herein describes a possible implementation, and that the operations and the steps may be rearranged or otherwise modified and that other implementations are possible.

At 2202, the method may include receiving an indication, from a first NE, of one or more validity criterion for a portion of network context information for a second NE. The operations of 2202 may be performed in accordance with examples as described herein. In some implementations, aspects of the operations of 2202 may be performed by a UE as described with reference to Figure 15.

At 2204, the method may include receiving identifiers for the portion of the network context information for the second NE. The operations of 2204 may be performed in accordance with examples as described herein. In some implementations, aspects of the operations of 2204 may be performed by a UE as described with reference to Figure 15.

**Figure 23** illustrates a flowchart of a method 2300 in accordance with aspects of the present disclosure. The operations of the method may be implemented by a NE as described herein. In some implementations, the NE may execute a set of instructions to control the function elements of the NE to perform the described functions. It should be noted that the method described herein describes a possible implementation, and that the operations and the steps may be rearranged or otherwise modified and that other implementations are possible.

At 2302, the method may include transmitting an indication, to a first NE, of one or more validity criterion for a portion of network context information for the second NE. The operations of 2302 may be performed in accordance with examples as described herein. In some implementations, aspects of the operations of 2302 may be performed by a NE as described with reference to Figure 17.

At 2304, the method may include transmitting identifiers for the portion of the network context information for the second NE, to a UE. The operations of 2304 may be performed in accordance with examples as described herein. In some implementations, aspects of the operations of 2304 may be performed by a NE as described with reference to Figure 17.

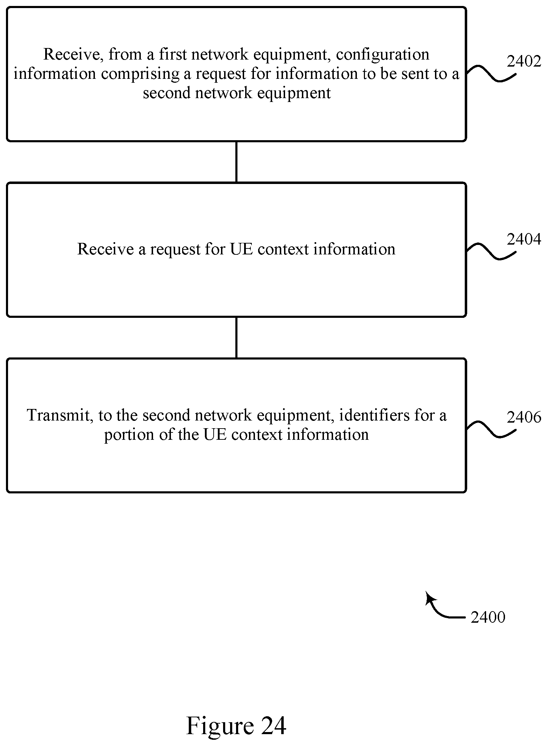

**Figure 24** illustrates a flowchart of a method 2400 in accordance with aspects of the present disclosure. The operations of the method may be implemented by a UE as described herein. In some implementations, the UE may execute a set of instructions to control the function elements of the UE to perform the described functions. It should be noted that the method described herein describes a possible implementation, and that the operations and the steps may be rearranged or otherwise modified and that other implementations are possible.

At 2402, the method may include receiving, from a first NE, configuration information comprising a request for information to be sent to a second NE. The operations of 2402 may be performed in accordance with examples as described herein. In some implementations, aspects of the operations of 2402 may be performed by a UE as described with reference to Figure 15.

At 2404, the method may include receiving a request for UE context information. The operations of 2404 may be performed in accordance with examples as described herein. In some implementations, aspects of the operations of 2404 may be performed by a UE as described with reference to Figure 15.

At 2406, the method may include transmitting, to the second NE, identifiers for a portion of the UE context information. The operations of 2406 may be performed in accordance with examples as described herein. In some implementations, aspects of the operations of 2406 may be performed a UE as described with reference to Figure 15.

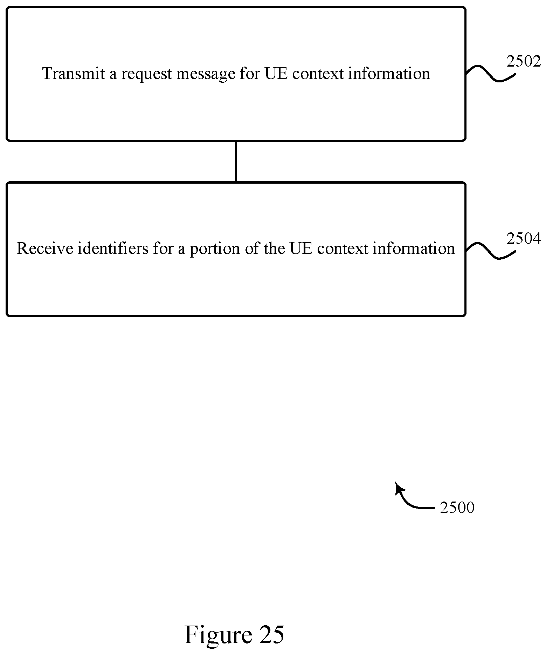

**Figure 25** illustrates a flowchart of a method 2500 in accordance with aspects of the present disclosure. The operations of the method may be implemented by a NE as described herein. In some implementations, the NE may execute a set of instructions to control the function elements of the NE to perform the described functions. It should be noted that the method described herein describes a possible implementation, and that the operations and the steps may be rearranged or otherwise modified and that other implementations are possible.

At 2502, the method may include transmitting a request message for UE context information. The operations of 2502 may be performed in accordance with examples as described herein. In some implementations, aspects of the operations of 2502 may be performed by a NE as described with reference to Figure 17.

At 2504, the method may include receiving identifiers for a portion of the UE context information. The operations of 2504 may be performed in accordance with examples as described herein. In some implementations, aspects of the operations of 2504 may be performed by a NE as described with reference to Figure 17.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

Aspects of the present disclosure may be defined by the following numbered clauses:

1. A user equipment (UE) for wireless communication, comprising:

   at least one memory; and
   at least one processor coupled with the at least one memory and configured to cause the UE to:

      receive an indication of one or more validity criterion for a portion of network context information; and
      store the indication of the one or more validity criterion for the portion of the network context information as part of learning model data.

2. The UE of clause 1, wherein the indication of the one or more validity criterion for the portion of the network context information comprises at least one of vendor specific validity information, cell specific validity information, or at least one radio access network (RAN) notification area.

3. The UE of clause 1 or 2, wherein the indication of the one or more validity criterion for the portion of the network context information comprises one or more nodes for applying a same interpretation of the network context information.

4. The UE of any preceding clause, wherein the at least one processor is configured cause the UE to receive one or more identifiers of the network context information.

5. The UE of clause 4, wherein the at least one processor is configured cause the UE to one or more of:

   jointly receive the one or more identifiers of the network context information and the indication of the one or more validity criterion for the portion of the network context information; or
   jointly receive the one or more identifiers of the network context information and a dataset for learning model life cycle management.

6. The UE of any preceding clause, wherein the indication of the one or more validity criterion for the portion of the network context information is received aperiodically prior to a received dataset for learning model life cycle management.

7. The UE of any preceding clause, wherein the at least one processor is configured cause the UE to transmit capability information that indicates whether the UE supports learning model-enabled measurement and reporting.

8. A network equipment for wireless communication, comprising:

at least one memory; and
at least one processor coupled with the at least one memory and configured to cause the network equipment to:

generate an indication of one or more validity criterion for a portion of network context information; and
transmit the indication of one or more validity criterion for the portion of network context information.

9. The network equipment of clause 8, wherein the indication of the one or more validity criterion for the portion of network context information comprises at least one of vendor specific validity information, cell specific validity information, or at least one radio access network (RAN) notification area.

10. The network equipment of clause 8 or 9, wherein the at least one processor is configured cause the network equipment to transmit one or more identifiers of the network context information.

11. The network equipment of clause 10, wherein the at least one processor is configured cause the network equipment to one or more of:

jointly transmit the one or more identifiers of the network context information and a dataset for learning model life cycle management; or
jointly transmit the one or more identifiers of the network context information and the indication of one or more validity criterion for the portion of the network context information.

12. The network equipment of any of clauses 8 to 11, wherein the at least one processor is configured cause the network equipment to transmit the indication of the one or more validity criterion for the portion of network context information aperiodically prior to a transmitted dataset for learning model life cycle management.

13. The network equipment of any of clauses 8 to 12, wherein the network context information comprises one or more of at least one network deployment scenario information, beam shape information, codebook information, antenna array information, transmitter to remote unit mapping, or one or more antenna down tilt angles.

14. A user equipment (UE) for wireless communication, comprising:

at least one memory; and
at least one processor coupled with the at least one memory and configured to cause the UE to:

generate an indication of one or more validity criterion for a portion of UE context information; and
transmit the indication of one or more validity criterion for the portion of UE context information.

15. The UE of clause 14, wherein the at least one processor is configured to cause the UE to receive configuration information for data collection of a dataset for learning model life cycle management, wherein the configuration information comprises timing information for a duration of validity of the configuration information for data collection.

16. The UE of clause 14 or 15, wherein the indication of the one or more validity criterion for the portion of UE context information comprises one or more of vendor specific validity information or UE specific validity information.

17. The UE of any of clauses 14 to 16, wherein the UE context information comprises one or more of antenna port layout information for the UE, UE battery information, UE movement data, or one or more UE hardware specifications.

18. A network equipment for wireless communication, comprising:

at least one memory; and
at least one processor coupled with the at least one memory and configured to cause the network equipment to:

receive an indication of one or more validity criterion for a portion of user equipment (UE) context information; and
store the indication of the one or more validity criterion for the portion of UE context information as part of learning model data.

19. The network equipment of clause 18, wherein the at least one processor is configured to cause the network equipment to transmit configuration information for data collection of a dataset for learning model life cycle management, wherein the configuration information comprises timing information for a duration of validity of the configuration information for data collection.

20. The network equipment of clause 18 or 19, wherein the at least one processor is configured to cause the network equipment to receive identifiers for the portion of the UE context information.

**Claims**

1.  A user equipment (UE) for wireless communication, comprising:

    at least one memory; and
    at least one processor coupled with the at least one memory and configured to cause the UE to:

    receive an indication of one or more validity criterion for a portion of network context information; and
    store the indication of the one or more validity criterion for the portion of the network context information as part of learning model data.

2.  The UE of claim 1, wherein the indication of the one or more validity criterion for the portion of the network context information comprises at least one of vendor specific validity information, cell specific validity information, or at least one radio access network (RAN) notification area.

3.  The UE of claim 1 or 2, wherein the indication of the one or more validity criterion for the portion of the network context information comprises one or more nodes for applying a same interpretation of the network context information.

4.  The UE of any preceding claim, wherein the at least one processor is configured cause the UE to receive one or more identifiers of the network context information.

5.  The UE of claim 4, wherein the at least one processor is configured cause the UE to one or more of:

    jointly receive the one or more identifiers of the network context information and the indication of the one or more validity criterion for the portion of the network context information; or
    jointly receive the one or more identifiers of the network context information and a dataset for learning model life cycle management.

6.  The UE of any preceding claim, wherein the indication of the one or more validity criterion for the portion of the network context information is received aperiodically prior to a received dataset for learning model life cycle management.

7.  The UE of any preceding claim, wherein the at least one processor is configured cause the UE to transmit capability information that indicates whether the UE supports learning model-enabled measurement and reporting.

8.  A network equipment for wireless communication, comprising:

    at least one memory; and
    at least one processor coupled with the at least one memory and configured to cause the network equipment to:

    generate an indication of one or more validity criterion for a portion of network context information; and
    transmit the indication of one or more validity criterion for the portion of network context information.

9.  The network equipment of claim 8, wherein the indication of the one or more validity criterion for the portion of network context information comprises at least one of vendor specific validity information, cell specific validity information, or at least one radio access network (RAN) notification area.

10. The network equipment of claim 8 or 9, wherein the at least one processor is configured cause the network equipment to transmit one or more identifiers of the network context information.

11. The network equipment of claim 10, wherein the at least one processor is configured cause the network equipment to one or more of:

jointly transmit the one or more identifiers of the network context information and a dataset for learning model life cycle management; or
jointly transmit the one or more identifiers of the network context information and the indication of one or more validity criterion for the portion of the network context information.

12. The network equipment of any of claims 8 to 11, wherein the at least one processor is configured cause the network equipment to transmit the indication of the one or more validity criterion for the portion of network context information aperiodically prior to a transmitted dataset for learning model life cycle management.

13. The network equipment of any of claims 8 to 12, wherein the network context information comprises one or more of at least one network deployment scenario information, beam shape information, codebook information, antenna array information, transmitter to remote unit mapping, or one or more antenna down tilt angles.

14. A user equipment (UE) for wireless communication, comprising:

at least one memory; and
at least one processor coupled with the at least one memory and configured to cause the UE to:

generate an indication of one or more validity criterion for a portion of UE context information; and
transmit the indication of one or more validity criterion for the portion of UE context information.

15. A network equipment for wireless communication, comprising:

at least one memory; and
at least one processor coupled with the at least one memory and configured to cause the network equipment to:

receive an indication of one or more validity criterion for a portion of user equipment (UE) context information; and
store the indication of the one or more validity criterion for the portion of UE context information as part of learning model data.

Figure 1

Figure 2

Figure 3

Figure 4

Figure 5

104
UE

102
NE

602 Request for data
[includes timing information]

608

604 Configuration for additional conditions

606 Indicator of validity criteria

Data generation at the gNB

610
Associated ID(s) mapped to dataset(s)

612 Dataset + additional conditions reporting
[input data for training + associated ID(s) ]

614 Change in additional conditions

616 Additional conditions
(updated associated ID(s))

600

Figure 6

104 UE

102 NE

702 Request for data
[includes timing information]

708

704 Request for additional conditions

Data generation at the gNB

706 Configuration & Indicator of validity criteria

710 Data reporting
[input data for training]

712 Additional conditions
(associated ID(s))

714 Associated ID(s) mapped to dataset(s)

716 Change in additional conditions

718 Additional conditions
(updated associated ID(s))

700

Figure 7

104

102

UE

NE

810

802 Configuration for data generation/measurements

Data
generation
at the UE

804 Request for additional conditions

806 Configuration for additional conditions

808 Additional conditions (associated ID(s)) & Indicator of
validity criterion

812
Associated ID(s) mapped to
dataset(s)

814
Change in additional conditions

816 Additional conditions
(updated associated ID(s))

818
Associated ID(s) mapped to
dataset(s)

800

Figure 8

104

102

UE

NE

902 Configuration for data generation (measurements)
and data reporting
[includes timing information]

904

906 Configuration for additional conditions

Data generation
(measurements)
at the UE

908 validity indicator

910
Associated ID(s) mapped to
dataset(s)

912 Data + additional conditions reporting
[input data for training + associated ID(s) ]

914
Change in additional conditions

916 Additional conditions
(updated associated ID(s))

900

Figure 9

104

102

UE

NE

1002 Configuration for data generation (measurements)
and data reporting
[includes timing information]

Data generation
(measurements)
at the UE

1004 Data reporting [input data for training] & validity
indicator

1006 Request/Configuration for additional conditions

1008 Additional conditions
(associated ID(s))

1010
Associated ID(s) mapped to
dataset(s)

1012
Change in additional conditions

1014 Additional conditions
(updated associated ID(s))

1000

Figure 10

104
102(a)
102(b)

| UE | Source NE | Target NE |

1102 Handover request
(UE context transfer)

1104
Admission control

1106 Handover request
acknowledgement (validity
indicator)

1108 RRC Reconfiguration
(Validity indicator of target gNB)

1110 Data buffering

1112 Data forwarding

1114 RRC Reconfiguration complete  (Handover complete)

1116 Request for additional conditions

1118 Additional conditions (associated ID(s))

1100

Figure 11

Figure 12

104
102(a)
102(b)

UE | Source NE | Target NE

1302 Handover request
(UE context transfer)

1304
Admission control

1306 Handover request
acknowledgement

1308 RRC Reconfiguration
(Handover command)

1310
Data buffering

1312 Data forwarding

1314 Forward additional conditions
(associated ID(s))

1316 RRC Reconfiguration complete (Handover
complete)

1318 Request for additional conditions

1320 Additional conditions (associated ID(s))

1300

Figure 13

104                    102(a)                  102(b)

| UE | | Source NE | | Target NE |

1402 Handover request
(UE context transfer)

1404
Admission control

1406 Handover request
acknowledgement

1408 RRC Reconfiguration (HO
command) + Configuration for
additional conditions

1410
Data buffering

1412 Data forwarding

1414 RRC Reconfiguration complete (Handover
complete) + Additional conditions (associated ID(s))

1416
Change in additional
conditions

1418 Additional conditions (updated
associated ID(s))

1400

Figure 14

User Equipment
1500

Processor
1502

Memory
1504

Controller
1506

Transceiver
1508

Receiver Chain(s)
1510

Transmitter Chain(s)
1512

Figure 15

Processor
1600

Controller
1602

Memory
1604

ALU(s)
1606

| ALU | ALU | ALU | ALU |
| ALU | ALU | ALU | ALU |
| ALU | ALU | ALU | ALU |
| ALU | ALU | ALU | ALU |
| ALU | ALU | ALU | ALU |

Figure 16

Network Equipment
1700

Processor
1702

Memory
1704

Controller
1706

Transceiver
1708

Receiver Chain(s)
1710

Transmitter Chain(s)
1712

Figure 17

Receive an indication of one or more validity criterion for a portion of network context information    1802

Store the indication of the one or more validity criterion for the portion of the network context information as part of learning model data    1804

1800

## Figure 18

Generate an indication of one or more validity criterion for a portion of network context information    1902

Transmit the indication of one or more validity criterion for the portion of network context information    1904

1900

## Figure 19

Generate an indication of one or more validity criterion for a portion of UE context information

~ 2002

Transmit the indication of one or more validity criterion for the portion of UE context information

~ 2004

↖
⌐ 2000

Figure 20

Receive an indication of one or more validity criterion for a portion of UE context information

~ 2102

Store the indication of the one or more validity criterion for the portion of UE context information as part of learning model data

~ 2104

↖
⌐ 2100

Figure 21

Receive an indication, from a first network equipment, of one
or more validity criterion for a portion of network context
information for a second network equipment ~ 2202

Receive identifiers for the portion of the network context
information for the second network equipment ~ 2204

2200

## Figure 22

Transmit an indication, to a first network equipment, of one or
more validity criterion for a portion of network context
information for the second network equipment ~ 2302

Transmit identifiers for the portion of the network context
information for the second network equipment, to a UE ~ 2304

2300

## Figure 23

Receive, from a first network equipment, configuration information comprising a request for information to be sent to a second network equipment    2402

Receive a request for UE context information    2404

Transmit, to the second network equipment, identifiers for a portion of the UE context information    2406

2400

Figure 24

Transmit a request message for UE context information    2502

Receive identifiers for a portion of the UE context information    2504

2500

Figure 25

**EUROPEAN SEARCH REPORT**

Application Number

EP 25 18 1577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/054357 A1 (KUMAR RAJEEV [US] ET AL) 15 February 2024 (2024-02-15)<br>* abstract *<br>* figures 5-8 *<br>* paragraph [0080] - paragraph [0121] *<br>----- | 1-15 | INV.<br>H04W24/02 |
| X | WO 2024/010340 A1 (SAMSUNG ELECTRONICS CO LTD [KR]) 11 January 2024 (2024-01-11)<br>* figure 2 *<br>* paragraph [0146] - paragraph [0171] *<br>----- | 1-15 | |
| A | WO 2023/211356 A1 (ERICSSON TELEFON AB L M [SE]) 2 November 2023 (2023-11-02)<br>* abstract *<br>* figure 2 *<br>* paragraph [0075] - paragraph [0088] *<br>----- | 1-15 | |
| | | | TECHNICAL FIELDS SEARCHED (IPC) |
| | | | H04W |

The present search report has been drawn up for all claims

| Place of search | Date of completion of the search | Examiner |
|---|---|---|
| Munich | 14 October 2025 | Volpato, Andrea |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 18 1577

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2025

| Patent document cited in search report | Publication date | Patent family member(s) | | Publication date |
|---|---|---|---|---|
| US 2024054357 A1 | 15-02-2024 | CN | 119678521 A | 21-03-2025 |
| | | EP | 4569851 A1 | 18-06-2025 |
| | | US | 2024054357 A1 | 15-02-2024 |
| | | WO | 2024035981 A1 | 15-02-2024 |
| WO 2024010340 A1 | 11-01-2024 | GB | 2620495 A | 10-01-2024 |
| | | WO | 2024010340 A1 | 11-01-2024 |
| WO 2023211356 A1 | 02-11-2023 | EP | 4515924 A1 | 05-03-2025 |
| | | WO | 2023211356 A1 | 02-11-2023 |

EPO FORM P0459

For more details about this annex : see Official Journal of the European Patent Office, No. 12/82